# EUROPÄISCHE PATENTSCHRIFT

(11) **EP 1 862 256 B1**
(45) Veröffentlichungstag und Bekanntmachung des Hinweises auf die Patenterteilung: **31.03.2010**
(21) Anmeldenummer: 07009684.7
(22) Anmeldetag: 15.05.2007
(51) Int. Cl.: B23Q 39/04

(54) **Drehbearbeitungszentrum**
Lathe processing facility
Centre de traitement rotatif

(30) Priorität: 30.05.2006 DE 102006026183
(43) Veröffentlichungstag der Anmeldung: 05.12.2007
(73) Patentinhaber: Index-Werke GmbH & Co. KG Hahn & Tessky, 73730 Esslingen (DE)
(72) Erfinder: Grossmann, Walter, 73666 Baltmannsweiler (DE)
(74) Vertreter: Hoeger, Stellrecht & Partner Patentanwälte

(56) Entgegenhaltungen:
- EP-A1- 0 901 857
- DE-A1- 4 310 038
- DE-A1- 19 959 961
- GB-A- 2 178 991
- US-A- 4 597 155

## Beschreibung

Die Erfindung betrifft ein Drehbearbeitungszentrum gemäß dem Oberbegriff des Anspruchs 1.

Ein derartiges Drehbearbeitungszentrum ist aus der DE 43 10 038 A bekannt, wobei bei dieser ein ungünstig hoher Raumbedarf besteht.

Der Erfindung liegt daher die Aufgabe zugrunde, ein Drehbearbeitungszentrum der gattungsgemäßen Art derart zu verbessern, dass dieses bei umfassenden Dreh- und/oder Fräsbearbeitungsmöglichkeiten möglichst kompakt baut und außerdem noch eine möglichst hohe Bearbeitungsgenauigkeit gewährleistet.

Diese Aufgabe wird bei einem Drehbearbeitungszentrum der eingangs beschriebenen Art erfindungsgemäß durch die Merkmale des Anspruchs 1 gelöst.

Der Vorteil der erfindungsgemäßen Lösung ist insbesondere darin zu sehen, dass ein derartiges Drehbearbeitungszentrum in Richtung der Werkstückspindelachsen eine geringere Baulänge aufweist als die bekannten Drehbearbeitungszentren, so dass dadurch eine besonders kompakte Konstruktion entsteht.

Die erfindungsgemäße Lösung sieht dabei vor, dass die erste Werkstückspindeleinheit quer zu ihrer Werkstückspindelachse unbewegbar am Maschinengestell angeordnet ist, so dass die erste Werkstückspindeleinheit lediglich in Richtung der Werkstückspindelachse bewegbar angeordnet werden muss und somit die erste Werkstückspindeleinheit sehr stabil und präzise relativ zum Maschinengestell geführt werden kann.

Um eine Bearbeitung eines in der ersten Werkstückspindeleinheit aufgenommen Werkstücks durchführen zu können, ist es zweckmäßig, dass die der ersten Werkstückspindeleinheit zugeordnete Werkzeugträgereinheit relativ zur ersten Werkstückspindelachse in einer X-Richtung des Drehbearbeitungszentrums bewegbar ist.

Eine besonders einfache und stabile Konstruktion liegt vor, da die der zweiten Werkstückspindeleinheit zugeordnete Werkzeugträgereinheit in Richtung der X-Achse stationär am Maschinengestell angeordnet ist, so dass dadurch bei Bearbeitung eines Werkstücks mit der zweiten Werkstückspindeleinheit und der zweiten mit ebenfalls großer Präzision durchführbar ist.

Die Bearbeitungsstellung der zweiten Werkstückspindeleinheit wird durch eine Bewegung der zweiten Werkstückspindeleinheit quer zur zweiten Werkstückspindelachse erreicht.

Um die zweite Werkstückspindeleinheit in einfacher Weise von der Werkstückübergabestellung in die Bearbeitungsstellung und umgekehrt bewegen zu können, ist vorgesehen, dass die zweite Werkstückspindeleinheit in X-Richtung bewegbar am Maschinengestell gehalten ist, so dass einerseits die Bewegbarkeit in der X-Richtung ausgenutzt werden kann, um in der Bearbeitungsstellung das in dieser Werkstückspindeleinheit gehaltene Werkstück relativ zur insbesondere stationär zum Maschinengestell angeordneten Werkzeugträgereinheit bewegen zu können, und andererseits die Bewegung in der X-Richtung gleichzeitig ausgenutzt werden kann, um die zweite Werkstückspindeleinheit zwischen der Werkstückübergabestellung und der Bearbeitungsstellung zu bewegen.

Prinzipiell wäre es denkbar, wenn die beiden Werkstückspindelachsen lediglich in der Werkstückübergabestellung koaxial zueinander stehen. Aus Gründen eines vorteilhaften Aufbaus ist es günstig, wenn beide Werkstückspindeleinheiten mit ihren Werkstückspindelachsen in einer gemeinsamen geometrischen Spindelführungsebene bewegbar sind.

Bei einer raumsparenden Anordnung der Werkzeugträgereinheiten ist vorgesehen, dass diese in einer gemeinsamen Werkzeugträgerebene liegen, wobei es nicht zwingend notwendig ist, dass beide Werkzeugträgereinheiten in der Werkzeugführungsebene sind, da die Bewegbarkeit einer Werkzeugträgereinheit in der Werkzeugführungsebene ausreicht.

Vorzugsweise ist die Werkzeugträgereinheit so aufgebaut, dass diese eine Werkzeugträgerbasis und einen Werkzeugträger aufweist.

Um die Werkzeugträgereinheit raumsparend anzuordnen, ist es günstig, wenn die Werkzeugträgerbasis zumindest teilweise in einen Durchlass des Maschinengestells hineinragt.

Ferner sieht eine günstige Ausführungsform vor, dass der Werkzeugträger in einen frontseitig des Maschinenbettkörpers angeordneten Arbeitsraum bewegbar ist.

Um für eine raumsparende Bauweise den Raum optimal auszunutzen, ist vorzugsweise vorgesehen, dass die Werkzeugträgereinheit eine Antriebseinheit aufweist, die auf einer dem Werkzeugträger gegenüberliegenden Seite der Werkzeugträgerbasis angeordnet ist.

Zweckmäßigerweise ist die Antriebseinheit auf einer dem Werkzeugträger gegenüberliegenden Seite des Maschinenbettkörpers angeordnet, so dass diese im Hinblick auf die Raumausnutzung im Bereich des Arbeitsraums keinen negativen Einfluss hat und auf einer Seite des Maschinenbettkörpers liegt, auf welcher sie hinsichtlich ihrer räumlichen Ausdehnung keinerlei störenden Einfluss hat.

Insbesondere ist bei dieser Lösung auch vorgesehen, dass die Antriebseinheit auf einer dem Werkzeugträger gegenüberliegenden Seite des Durchlasses angeordnet ist.

Hinsichtlich der Bewegbarkeit des Werkzeugträgers wurden bislang keine näheren Angaben gemacht. So sieht eine vorteilhafte Ausführungsform vor, dass der Werkzeugträger der mindestens einen Werkzeugträgereinheit parallel zu einer Werkzeugführungsebene bewegbar ist, die quer zu der Werkstückspindelachse der dieser zugeordneten Werkstückspindel verläuft.

Ferner ist dabei vorgesehen, dass der Werkzeugträger der mindestens einen Werkzeugträgereinheit in der Werkzeugführungsebene in einer ersten, parallel zur Spindelführungsebene verlaufenden Richtung bewegbar ist.

Eine weitere zweckmäßige Ausführungsform sieht vor, dass der Werkzeugträger der mindestens einen Werkzeugträgereinheit in einer zweiten, senkrecht zur Spindelführungsebene verlaufenden Richtung bewegbar ist.

Schließlich ist bei einer vorteilhaften Lösung vorgesehen, dass der Werkzeugträger der mindestens einen Werkzeugträgereinheit um eine parallel zur Werkzeugführungsebene verlaufende Achse drehbar ist.

Hinsichtlich der Anordnung der Werkzeugträgerbasis relativ zum Maschinenbettkörper wurden bislang keine näheren Angaben gemacht. So sieht eine günstige Lösung vor, dass die Werkzeugträgerbasis auf einem Werkzeugschlitten angeordnet ist.

Dabei ist der Werkzeugschlitten vorzugsweise in einer Schlittenvorschubrichtung bewegbar.

Ferner ist der Werkzeugschlitten vorzugsweise in einer Schlittenvorschubrichtung bewegbar, die ungefähr parallel zu einer Querrichtung zur jeweiligen Werkstückspindelachse verläuft.

Außerdem ist vorgesehen, dass der Werkzeugschlitten in einer X-Richtung des Drehbearbeitungszentrums bewegbar ist.

Hinsichtlich der Realisierung einer weiteren Vorschubrichtung des Werkzeugträgers ist vorgesehen, dass der Werkzeugträger gegenüber der Werkzeugträgerbasis in einer Vorschubrichtung bewegbar ist.

Vorzugsweise verläuft dabei die Vorschubrichtung ungefähr parallel zu einer Querrichtung zur jeweiligen Werkstückspindelachse.

Dabei ist die Vorschubrichtung vorzugsweise eine Y-Richtung des Drehbearbeitungszentrums.

Insbesondere verläuft in diesem Fall die Vorschubrichtung parallel zu einer Querrichtung zur Schlittenvorschubrichtung, längs welcher die Werkzeugträgerbasis bewegbar ist.

Darüber hinaus ist der Werkzeugträger gegenüber der Werkzeugträgerbasis vorzugsweise um eine Drehachse drehbar.

Insbesondere ist die Drehachse so ausgerichtet, dass diese ungefähr parallel zu der Vorschubrichtung verläuft.

Vorzugsweise ist die Drehachse so ausgerichtet, dass sie in einer Richtung verläuft, die parallel zu einer Querrichtung zur jeweiligen Werkstückspindelachse ausgerichtet ist.

Ferner verläuft insbesondere die Drehachse parallel zu einer Querrichtung zur Schlittenvorschubrichtung.

Eine bevorzugte Lösung sieht vor, dass die Drehachse eine B-Achse des Drehbearbeitungszentrums ist.

Um die Bewegbarkeit des Werkzeugträgers relativ zur Werkzeugträgerbasis realisieren zu können, ist vorzugsweise vorgesehen, dass der Werkzeugträger durch einen Führungsarm mit der Werkzeugträgerbasis verbunden ist, wobei der Führungsarm mit dem Werkzeugträger zweckmäßigerweise relativ zur Werkzeugträgerbasis bewegbar ist.

Hinsichtlich der Ausbildung des Werkzeugträgers wurden im Zusammenhang mit der bisherigen Beschreibung der einzelnen Ausführungsbeispiele keine näheren Angaben gemacht. So sieht eine vorteilhafte Lösung vor, dass der Werkzeugträger eine Werkzeugspindel aufweist.

Beispielsweise ist bei einer derartigen Werkzeugspindel vorgesehen, dass ein Werkzeugspindelgehäuse an dem Führungsarm der Werkzeugträgereinheit gehalten ist.

Vorzugsweise ist dabei das Werkstückspindelgehäuse fest mit einem vorderen Ende des Führungsarms verbunden.

Die Werkzeugspindel kann in unterschiedlicher Art und Weise ausgebildet und relativ zu der Drehachse der Werkzeugträgereinheit angeordnet sein. Eine vorteilhafte Lösung sieht vor, dass die Werkzeugspindel eine quer zu der Drehachse ausgerichtete Werkzeugspindelachse aufweist.

Vorzugsweise ist die Werkzeugspindel ebenfalls so ausgebildet, dass diese eine quer zu der Vorschubrichtung ausgerichtete Werkzeugspindelachse aufweist.

Ferner ist eine in dem Werkzeugspindelgehäuse gelagerte Spindelwelle an einem Ende mit einer Werkzeugaufnahme versehen.

Außerdem ist die Werkzeugaufnahme relativ zur Drehachse auf einer Seite derselben angeordnet.

Bei einer derartigen Werkzeugspindel ist zunächst nur ein Werkzeug einsetzbar.

Um die Zahl der einsetzbaren Werkzeuge zu erhöhen, ist vorzugsweise vorgesehen, dass das Werkzeugspindelgehäuse einen Zusatzwerkzeugträger aufweist.

Ein derartiger Zusatzwerkzeugträger könnte prinzipiell an jeder Stelle des Werkzeugspindelgehäuses angeordnet sein.

Beispielsweise wäre es denkbar, den Zusatzwerkzeugträger auf einer der Werkzeugaufnahme gegenüberliegenden Seite am Werkzeugspindelgehäuse anzuordnen.

Eine besonders günstige Lösung sieht jedoch vor, dass der Zusatzwerkzeugträger an dem Werkzeugspindelgehäuse auf mindestens einer Seite der Werkzeugspindelachse angeordnet ist.

Eine weitere zweckmäßige Lösung sieht vor, dass das Werkzeugspindelgehäuse auf mehreren Seiten einen Zusatzwerkzeugträger trägt, so dass die Möglichkeit besteht, mehrere Werkzeugträger einzusetzen und somit die Zahl der einsetzbaren Werkzeuge noch weiter zu vervielfachen.

Besonders günstig ist es dabei, wenn das Werkzeugspindelgehäuse auf einander gegenüberliegenden Seiten einen Zusatzwerkzeugträger trägt.

Vorzugsweise sind dabei die Zusatzwerkzeugträger auf einander gegenüberliegenden Seiten der Drehachse am Werkzeugspindelgehäuse angeordnet.

Um die Zahl der Werkzeuge weiter erhöhen zu können, ist zweckmäßigerweise vorgesehen, dass der Zusatzwerkzeugträger als Mehrfachwerkzeugträger ausgebildet ist.

Ein derartiger Mehrfachwerkzeugträger könnte beispielsweise in einer zweidimensionalen Fläche angeordnete Werkzeuge aufweisen.

Besonders günstig ist es jedoch, wenn der Mehrfachwerkzeugträger als Linearwerkzeugträger ausgebildet ist, da ein derartiger Linearwerkzeugträger räumlich günstige Bedingungen für die Anordnung der mehreren Werkzeuge bei gleichzeitig geringer Störung der übrigen Werkzeuge beim Einsatz eines der Werkzeuge am Werkstück aufweist.

Ein derartiger Linearwerkzeugträger kann in unterschiedlichster Art und Weise angeordnet sein.

Beispielsweise wäre es denkbar, den Linearwerkzeugträger parallel zur Werkzeugspindelachse auszurichten.

Besonders günstig ist es jedoch, wenn der Linearwerkzeugträger in einer zur Vorschubrichtung der Werkzeugspindel parallelen Reihenrichtung aufgereihte Werkzeugaufnahmen aufweist, wobei die Vorschubrichtung die Richtung ist, längs welcher eine Bewegung der Werkzeugspindel relativ zur Werkzeugträgerbasis erfolgt.

Derartige Werkzeugaufnahmen sind üblicherweise Werkzeughalteraufnahmen, in welche Werkzeuge tragende Werkzeughalter einsetzbar sind. Es ist aber auch denkbar, die Werkzeugaufnahmen so auszubilden, dass in diese direkt Werkzeuge, wie beispielsweise Bohrwerkzeuge, einsetzbar sind.

Um besonders günstige räumliche Möglichkeiten zum Einsatz der Werkzeuge zu schaffen, ist vorzugsweise vorgesehen, dass alle Werkzeugaufnahmen des Linearwerkzeugträgers in einer Werkzeugebene liegen.

Im Fall einer Werkzeugspindel mit Linearwerkzeugträgern ist es besonders günstig, wenn eine Werkzeugebene der Werkzeugspindel und die auf diese folgenden Werkzeugebenen der Linearwerkzeugträger jeweils einen Winkel miteinander einschließen, der größer als 90° und kleiner als 180° ist.

Vorzugsweise ist vorgesehen, dass jeweils zwei aufeinanderfolgende der Werkzeugebenen miteinander einen Winkel einschließen, der größer ist als 100°, noch besser größer als 110°, insbesondere ungefähr 120° ist.

Damit besteht die Möglichkeit, die in einer der Werkzeugebenen befindlichen Werkzeuge so einzusetzen, dass die in den anderen Werkzeugebenen befindlichen Werkzeuge möglichst wenig Raum benötigen und somit auch möglichst wenig anderweitige Bearbeitungen durch ihre Ausdehnung beeinträchtigen.

Eine weitere vorteilhafte Lösung einer erfindungsgemäßen Werkzeugträgereinheit sieht vor, dass der Werkzeugträger als Mehrfachlinearwerkzeugträger ausgebildet ist, das heißt aus einer Vielzahl von Linearwerkzeugträgern zusammengesetzt ist.

Vorzugsweise ist dabei vorgesehen, dass die Linearwerkzeugträger in einer zur Vorschubrichtung des Mehrfachlinearwerkzeugträgers parallelen Reihenrichtung aufgereihte Werkzeugaufnahmen aufweisen, wobei die Vorschubrichtung die Richtung ist, längs welcher der Mehrfachlinearwerkzeugträger relativ zur Werkzeugträgerbasis bewegbar ist.

Insbesondere sind auch bei einem derartigen Mehrfachlinearwerkzeugträger alle Werkzeugaufnahmen jedes der Linearwerkzeugträger in einer Werkzeugebene angeordnet.

Zweckmäßigerweise sind auch bei einem derartigen Mehrfachlinearwerkzeugträger die Werkzeugebenen der Linearwerkzeugträger so angeordnet, dass jeweils zwei aufeinanderfolgende der Werkzeugebenen einen Winkel miteinander einschließen, der größer als 90° und kleiner als 180° ist.

Vorzugsweise ist auch bei einem derartigen Mehrfachlinearwerkzeugträger der Winkel, den jeweils aufeinanderfolgende Werkzeugebenen der Linearwerkzeugträger miteinander einschließen, größer als 100°, noch besser größer als 110°, insbesondere ungefähr 120°.

Bei einem weiteren vorteilhaften Ausführungsbeispiel ist vorzugsweise vorgesehen, dass der Werkzeugträger als Werkzeugrevolver ausgebildet ist.

Im Fall eines Werkzeugrevolvers ist vorgesehen, das der Werkzeugrevolver einen Revolverkopf aufweist, der um eine Revolverachse drehbar ist.

Vorzugsweise ist bei dieser Lösung vorgesehen, dass die Revolverachse die Drehachse schneidet, um welche der Werkzeugrevolver gegenüber der Werkzeugträgerbasis drehbar ist.

In diesem Fall ist vorzugsweise ein Revolvergehäuse des Werkzeugrevolvers fest mit dem Führungsarm verbunden.

Ein derartiger Revolverkopf ist beispielsweise so ausgebaut, dass dieser Werkzeugaufnahmen aufweist, die so angeordnet sind, dass Werkzeugrichtungen von in diesem eingesetzten Werkzeugen in einer Werkzeugebene liegen.

Eine derartige Werkzeugebene ist vorzugsweise so ausgerichtet, dass sie senkrecht zur Revolverachse verläuft.

Ferner ist es hinsichtlich der Aufnahme der auf die Werkzeuge wirkenden Kräfte besonders günstig, wenn die Drehachse, um welche der Werkzeugrevolver gegenüber der Werkzeugträgerbasis drehbar ist, parallel zur Werkzeugebene verläuft.

Besonders günstig ist es, wenn ein Schnittpunkt der Drehachse und der Revolverachse in der Werkzeugebene liegt.

Hinsichtlich der Ausbildung des Maschinengestells wurden bislang keine näheren Angaben gemacht. So sieht eine besonders günstige Lösung vor, dass das Maschinengestell einen aus zwei im Abstand voneinander angeordneten Säulen gebildeten Maschinenbettkörper aufweist. Ein derartiger Maschinenbettkörper hat den Vorteil, dass dieser für den erfindungsgemäßen kompakten Aufbau eine optimale Stabilität verleiht.

Besonders günstig ist es dabei, wenn sich die Säulen mit ihren Längsachsen quer zu der Standfläche des Maschinengestells erstrecken, so dass sich die Säulen über der Standfläche erheben und somit in einfacher Weise einen Anbau der Werkstückspindeleinheiten und der Werkzeugträgereinheit ermöglichen.

Prinzipiell wäre es dabei denkbar, dass sich die Säulen mit ihren Längsachsen in unterschiedlichen Richtungen, beispielsweise V-förmig zueinander erstrecken.

Eine besonders günstige Konfiguration sieht jedoch vor, dass sich die Säulen parallel zueinander erstrecken.

Ferner könnten im Rahmen der bislang beschriebenen Lösungen die Säulen so ausgebildet sein, dass sie sich mit ihren Längsachsen schräg, das heißt in einem spitzen Winkel zur Standfläche erstrecken. Eine zweckmäßige Lösung sieht jedoch vor, dass die Säulen sich im Wesentlichen senkrecht zur Standfläche erstrecken.

Ferner könnten die Säulen auch grundsätzlich unterschiedliche Längen aufweisen.

Eine konstruktiv günstige Lösung sieht jedoch vor, dass die Säulen ungefähr die gleichen Längen aufweisen.

Der Raum der sich dadurch ergibt, dass die Säulen im Abstand voneinander angeordnet sind, könnte gegebenenfalls noch von einer Wand oder einer Verbindungskonstruktion zwischen den Säulen durchsetzt sein.

Eine besonders günstige Lösung sieht jedoch vor, dass zwischen den Säulen mindestens ein Durchlass vorgesehen ist, das heißt, dass zwischen den Säulen ein von beiden Seiten frei zugänglicher Freiraum besteht.

Beim Vorsehen eines Durchlasses wäre es im einfachsten Falle denkbar, dass die Säulen sich über einer Gestellbasis erheben und keine Verbindung miteinander aufweisen.

Um jedoch die Säulen stabil relativ zueinander positionieren zu können, ist vorzugsweise vorgesehen, dass die Säulen durch mindestens eine Querverstrebung verbunden sind.

Im Fall eines Durchlasses ist dabei vorgesehen, dass die Querverstrebung außerhalb des Durchlasses liegt.

Eine konstruktiv günstige Lösung sieht vor, dass die Säulen endseitig durch mindestens eine Querverstrebung verbunden sind.

Dabei kann auf einer der Gestellbasis gegenüberliegenden Seite die mindestens eine Querverstrebung vorgesehen sein.

Es ist aber auch denkbar, dass an beiden Enden der Säulen diese mit einer Querverstrebung miteinander verbunden sind.

Die Querverstrebung kann in unterschiedlichster Art und Weise ausgebildet sein.

Beispielsweise kann die Querverstrebung ein separates, mit den Säulen zu verbindendes Teil sein.

Eine konstruktiv für die Stabilität besonders zweckmäßige Lösung sieht vor, dass die mindestens eine Querverstrebung an mindestens einer der Säulen angeformt ist und somit mit mindestens einer der Säulen eine Einheit bildet. In diesem Fall kann dann die Querverstrebung lösbar mit der anderen Säule verbunden sein.

Es ist aber auch denkbar, die Querverstrebung integral als an beide Säulen angeformtes Teil auszubilden.

Hinsichtlich der Ausbildung eines erfindungsgemäß aufgebauten Maschinenbettkörpers wurden bislang keine näheren Angaben gemacht. So wäre es grundsätzlich denkbar, den Maschinenbettkörper als einstückiges Teil auszubilden, aus Gründen einer einfacheren Fertigung ist es aber vorteilhaft, den Maschinenbettkörper aus zwei Teilen zusammengesetzt auszubilden.

Dabei könnte die Trennung des Maschinenbettkörpers an unterschiedlichsten Stellen erfolgen. Eine günstige Lösung sieht vor, dass der Maschinenbettkörper aus einer ersten Säule mit mindestens einem Quersteg und einer zweiten Säule zusammengesetzt ist, wobei die erste Säule mit dem mindestens einen Quersteg und die zweite Säule die zwei Teile des Maschinenbettkörpers bilden.

Eine hinsichtlich der Stabilität besonders zweckmäßige konstruktive Lösung sieht vor, dass die Säulen zu einem jochähnlichen Körper verbunden sind.

Ein derartiger jochähnlicher Körper sieht insbesondere vor, dass dieser mindestens einen Durchlass umschließt.

Ein jochähnlicher Körper liegt aber auch dann vor, wenn dieser zwei Durchlässe umschließt.

Hinsichtlich der Ausbildung der Frontseiten der Säulen wurden bislang keine näheren Angaben gemacht.

So sieht eine günstige Lösung vor, dass die Säulen abgeflachte Frontseiten aufweisen, so dass sich auf diesen in einfacher Weise Baugruppen, wie beispielsweise Werkstückspindeleinheiten, montieren lassen.

Ferner ist hinsichtlich des Verlaufs der Frontseiten vorgesehen, dass die jeweilige Frontseite quer zur Standfläche des Maschinengestells verläuft, wobei bei einer vorteilhaften Lösung vorgesehen ist, dass die beiden Frontseiten in einer gemeinsamen geometrischen Ebene liegen.

Darüber hinaus ist ebenfalls zweckmäßiger Weise vorgesehen, dass die Säulen einander zugewandte abgeflachte Querseiten aufweisen, wobei an mindestens einer dieser Querseiten eine Werkzeugträgereinheit montierbar ist.

Vorzugsweise sind dabei die abgeflachten Querseiten auf gegenüberliegenden Seiten des Durchlasses angeordnet.

Ferner ist vorzugsweise auch ebenfalls vorgesehen, dass die Querseiten quer zu einer Standfläche des Maschinengestells verlaufen.

Hinsichtlich der Ausbildung der Säulen selbst wurden bislang keine näheren Angaben gemacht.

So könnten die Säulen grundsätzlich jede Querschnittsform aufweisen, eine derartige Querschnittsform kann dabei rund oder oval sein, wobei gegebenenfalls die Frontseiten und die Querseiten Abflachungen einer runden oder einer ovalen Querschnittsform sind.

Es ist aber auch denkbar, dass die Säulen vieleckige Querschnittsformen aufweisen.

Beispielsweise wäre eine dreieckige Querschnittsform der Säulen denkbar.

Eine besonders günstige Lösung sieht vor, dass die Säulen ungefähr rechteckige Querschnittsformen aufweisen.

Hinsichtlich der Montage der ersten Werkstückspindeleinheit wurden bislang keine näheren Angaben gemacht. So sieht eine besonders günstige Lösung vor, dass die erste Werkstückspindeleinheit an einer dem Arbeitsraum zugewandten Frontseite einer ersten der Säulen angeordnet ist.

Ferner wurden auch hinsichtlich der Anordnung der zweiten Werkstückspindeleinheit keine näheren Angaben gemacht.

So sieht eine besonders günstige Lösung vor, dass die zweite Werkstückspindeleinheit an einer dem Arbeitsraum zugewandten Frontseite einer zweiten der Säulen angeordnet ist.

Hinsichtlich der Anordnung der Werkstückspindeleinheiten an den Säulen wurden bislang keine näheren Angaben gemacht.

Prinzipiell wäre es denkbar, die Werkstückspindeleinheiten stationär an den Frontseiten der Säulen anzuordnen.

Eine besonders günstige Lösung sieht vor, dass mindestens eine der Werkstückspindeleinheiten parallel zu der jeweiligen Frontseite relativ zum Maschinenbettkörper bewegbar geführt ist, um eine für die Bearbeitung des Werkstücks erforderliche Achsbewegung mit der Werkstückspindeleinheit realisieren zu können.

Zweckmäßig ist es jedoch, wenn jede der Werkstückspindeleinheiten parallel zu der diese jeweils tragenden Frontseite relativ zum Maschinenbettkörper bewegbar geführt ist.

Hinsichtlich der Anordnung der Werkzeugträgereinheiten wurden bislang keine näheren Angaben gemacht. Beispielsweise wäre es denkbar, die Werkzeugträgereinheiten ebenfalls an den Frontseiten der Säulen anzuordnen.

Eine konstruktiv und hinsichtlich der Stabilität besonders günstige Lösung sieht vor, dass mindestens eine Werkzeugträgereinheit an einer der jeweils anderen Säule zugewandten Querseite einer der Säulen angeordnet ist.

Eine günstige Verteilung der Werkzeugträgereinheiten liegt dann vor, wenn jede der zwei Werkzeugträgereinheiten an einer Querseite einer der Säulen des Maschinenbettkörpers angeordnet ist.

Prinzipiell wäre es denkbar, beide Werkzeugträgereinheiten an einer Säule anzuordnen.

Besonders günstig ist es jedoch, die Werkzeugträgereinheiten an unterschiedlichen Säulen des Maschinenbettkörpers angeordnet sind.

Eine hinsichtlich der Präzision bei der Bearbeitung besonders günstige Lösung sieht vor, dass eine erste Werkzeugträgereinheit vorgesehen ist und dass die erste Werkzeugträgereinheit der ersten Werkstückspindeleinheit zugeordnet ist, so dass in einfacher Weise eine Bearbeitung eines in der ersten Werkstückspindeleinheit gehaltenen Werkstücks realisierbar ist.

Dabei ist es hinsichtlich der Präzision der Bearbeitung vorteilhaft, wenn die erste Werkzeugträgereinheit an der die erste Werkstückspindeleinheit tragenden Säule angeordnet ist.

Ferner ist vorzugsweise eine zweite Werkzeugträgereinheit vorgesehen und diese zweite Werkzeugträgereinheit ist der zweiten Werkstückspindeleinheit zugeordnet.

In diesem Fall ist es ebenfalls günstig, wenn die zweite Werkzeugträgereinheit an der die zweite Werkstückspindeleinheit tragenden Säule angeordnet ist.

Hinsichtlich der Anordnung der jeweiligen Werkzeugträgereinheit relativ zu dem Durchlass wurden bislang keine näheren Angaben gemacht.

So sieht eine vorteilhafte Lösung vor, dass sich die Werkzeugträgereinheit in den Durchlass hinein erstreckt.

Vorzugsweise ist sogar vorgesehen, dass sich die Werkzeugträgereinheit durch den Durchlass hindurch erstreckt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Figur 1: eine schematische Frontansicht eines ersten Ausführungsbeispiels eines erfindungsgemäßen Drehbearbeitungszentrums;
- Figur 2: einen Schnitt längs Linie 2-2 in Figur 1;
- Figur 3: eine Ansicht ähnlich Figur 1 eines zweiten Ausführungsbeispiels eines erfindungsgemäßen Drehbearbeitungszentrums;
- Figur 4: eine Darstellung ähnlich Figur 3 in einer Übergabestellung der Werkstückspindeleinheiten;
- Figur 5: eine Darstellung ähnlich Figur 3 in einer Bearbeitungsstellung der Werkstückspindeleinheiten;
- Figur 6: eine Ansicht ähnlich Figur 1 eines dritten Ausführungsbeispiels eines erfindungsgemäßen Drehbearbeitungszentrums;
- Figur 7: eine Ansicht ähnlich Figur 1 eines vierten Ausführungsbeispiels eines erfindungsgemäßen Drehbearbeitungszentrums;
- Figur 8: einen Schnitt längs Linie 8-8 in Figur 7;
- Figur 9: eine Ansicht ähnlich Figur 1 eines fünften Ausführungsbeispiels eines erfindungsgemäßen Drehbearbeitungszentrums;
- Figur 10: eine vergrößerte Draufsicht ähnlich Figur 9 auf eine der Werkzeugspindeln des fünften Ausführungsbeispiels;
- Figur 11: eine Draufsicht in Richtung des Pfeils X in Figur 10;
- Figur 12: eine Ansicht ähnlich Figur 9 bei Einsatz von Werkzeugen der Linearwerkzeugträger in radialer Richtung zur Werkstückspindelachse;
- Figur 13: eine Darstellung ähnlich Figur 9 bei Einsatz von Werkzeugen der Linearwerkzeugträger parallel zur Werkzeugspindelachse;
- Figur 14: eine Ansicht ähnlich Figur 1 eines sechsten Ausführungsbeispiels eines erfindungsgemäßen Drehbearbeitungszentrums;
- Figur 15: eine Draufsicht in Richtung des Pfeils Z in Figur 14;
- Figur 16: eine Ansicht ähnlich Figur 1 eines siebten Ausführungsbeispiels eines erfindungsgemäßen Drehbearbeitungszentrums.

Ein erstes Ausführungsbeispiel eines erfindungsgemäßen Drehbearbeitungszentrums umfasst ein als Ganzes mit 10 bezeichnetes Maschinengestell, mit einer Gestellbasis 12, welche mit ihrer Unterseite 14 auf einer Standfläche 16 ruht und einem sich über der Gestellbasis 12 erhebenden Maschinenbettkörper 18, welcher eine erste Säule 20 und eine zweite Säule 22 umfasst, die im Abstand voneinander angeordnet sind und sich mit ungefähr parallel zueinander verlaufenden Längsachsen 24, 26 von der Gestellbasis 12 weg erstrecken, wobei die Längsachsen 24, 26 vorzugsweise quer zur Standfläche 16, vorzugsweise senkrecht zu dieser, verlaufen.

Die beiden Säulen 20, 22 könnten prinzipiell sich unabhängig voneinander über der Gestellbasis 12 erheben. Weit stabiler ist jedoch ein Aufbau des Maschinenbettkörpers 18, bei welchem die beiden Säulen 20, 22 durch eine erste Querverstrebung 28 und eine zweite Querverstrebung 30 miteinander verbunden sind.

Ferner sind die beiden Säulen 20, 22 in einem derartigen Abstand voneinander angeordnet, dass zwischen diesen ein ausreichend großer Durchlass 32 besteht, der im Fall der Querverstrebungen 28, 30 allseitig von dem Maschinenbettkörper umschlossen ist, so dass der Maschinenbettkörper 18 insgesamt jochähnlich ausgebildet ist und somit jochähnlich geschlossen den Durchlass 32 umgibt.

Ferner weist die erste Säule 20 eine erste Frontseite 34 auf und die zweite Säule 22 weist eine zweite Frontseite 36 auf, die einem Arbeitsraum 40 zugewandt sind, der auf einer Seite des Maschinenbettkörpers 18 angeordnet ist und vor den beiden Frontseiten 34, 36 sowie vor dem Durchlass 32 liegt und sich quer zu den Längsachsen 24, 26 und in Richtung parallel zu den Längsachsen 26 vor dem Maschinenkörper 18 ausdehnt.

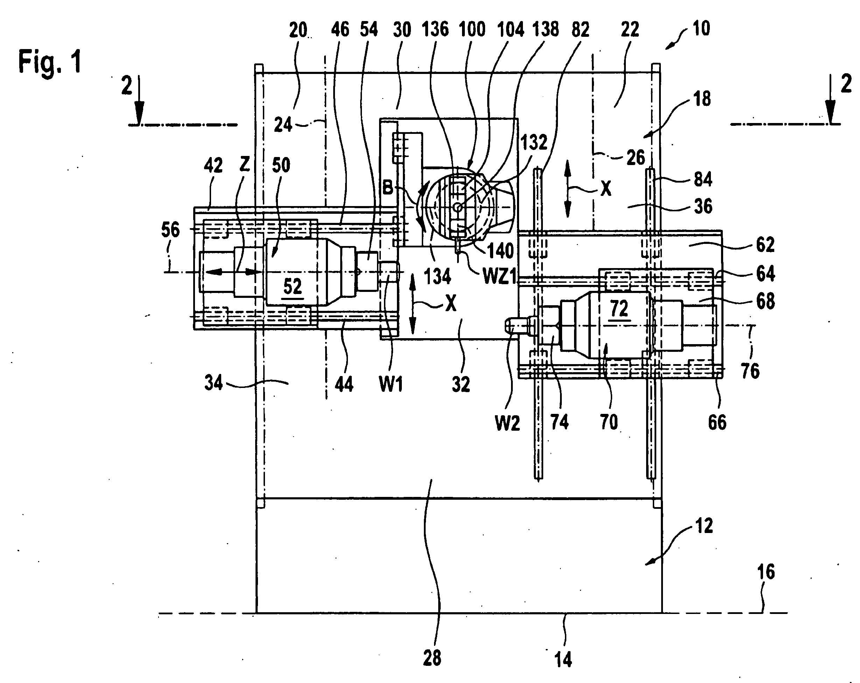

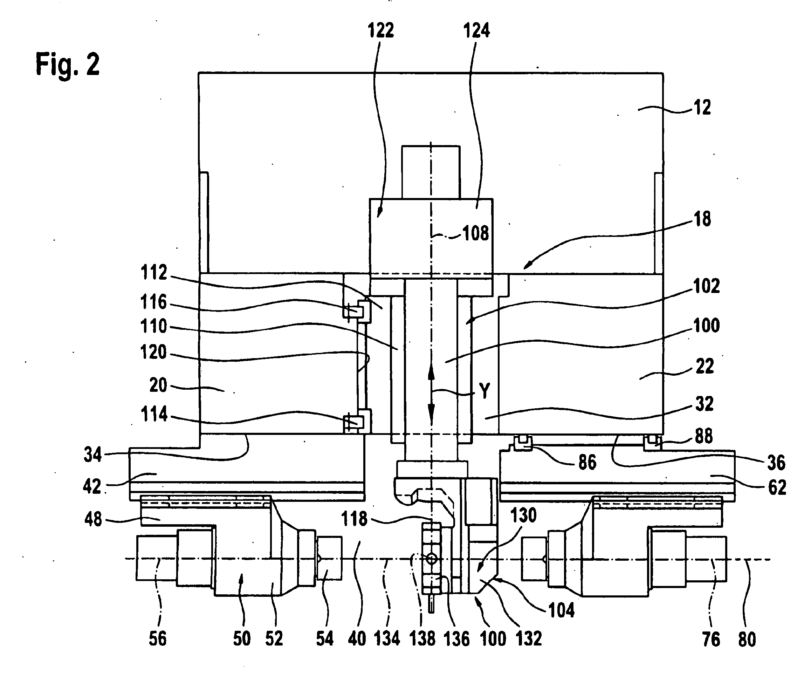

Wie ferner in Figur 1 und 2 dargestellt, ist an der ersten Frontseite 34 ein Grundkörper 42 mit parallel zueinander verlaufenden Schlittenführungen 44, 46 angeordnet, die sich quer zu der Längsachse 24 der ersten Säule 20 erstrecken und auf denen ein Spindelschlitten 48 geführt ist, auf dem eine als Ganzes mit 50 bezeichnete erste Werkstückspindeleinheit angeordnet ist, die ein erstes Werkstückspindelgehäuse 52 umfasst, in welchem eine erste Werkstückspindel 54 um eine erste Werkstückspindelachse 56 drehbar gelagert ist.

Vorzugsweise verläuft die Werkstückspindelachse 56 parallel zu den Schlittenführungen 44, 46 und außerdem im Wesentlichen in horizontaler Richtung.

Durch die auf dem Grundkörper 42 sitzenden Schlittenführungen 44, 46 ist somit die erste Werkstückspindeleinheit 50 in Richtung parallel zur ersten Werkstückspindelachse 56 und somit in einer sogenannten Z-Richtung relativ zur ersten Säule 20 bewegbar.

Auf der zweiten Frontseite 36 der zweiten Säule 22 ist ebenfalls ein Grundkörper 62 vorgesehen, auf welchem ebenfalls quer zu der Längsachse 26 verlaufende Schlittenführungen 64, 66 angeordnet sind, auf denen ein Spindelschlitten 68 verfahrbar angeordnet ist.

Auch der Spindelschlitten 68 trägt eine zweite Werkstückspindeleinheit 70 mit einem zweiten Werkstückspindelgehäuse 72, in welchem eine zweite Werkstückspindel 74 um eine zweite Werkstückspindelachse 76 drehbar gelagert ist.

Insbesondere liegen die erste Werkstückspindelachse 56 und die zweite Werkstückspindelachse 76 in einer als Ganzes mit 80 bezeichneten Spindelebene, die vorzugsweise parallel zu den Frontseiten 34 und 36 und im Abstand von diesen verläuft.

Prinzipiell wäre es denkbar, den Grundkörper 62 stationär an der Frontseite 36 anzuordnen und zwar so, dass die erste und die zweite Werkstückspindelachsen 56 und 76 miteinander fluchten.

Es sind bei dem ersten Ausführungsbeispiel, so wie in Figur 1 und 2 dargestellt, auf der Frontseite 36 Schlittenführungen 82, 84 vorgesehen, auf denen der Grundkörper 62 mit Führungskörpern 86, 88 geführt ist, wobei die Schlittenführungen 82, 84 vorzugsweise ungefähr parallel zur Längsachse 26 der Säule 22 verlaufen.

Somit ist die zweite Werkstückspindeleinheit 70 einerseits durch den Spindelschlitten 68 ebenfalls in Z-Richtung bewegbar und andererseits durch Verfahren des Grundkörpers 42 auf den Schlittenführungen 82 und 84 relativ zur zweiten Säule 22 noch in einer sogenannten X-Richtung, die senkrecht zu den Spindelachsen 56 und 76 verläuft.

Die erste Werkstückspindel 54 und die zweite Werkstückspindel 74 sind so ausgebildet, dass auf der jeweils der anderen Werkstückspindel 74 bzw. 54 zugewandten Seite eine zeichnerisch nicht dargestellte Werkstückspanneinrichtung vorgesehen ist, durch welche ein erstes Werkstück W1 in der ersten Werkstückspindel 54 und ein zweites Werkstück W2 in der zweiten Werkstückspindel 74 fixierbar und zur Bearbeitung desselben um die jeweilige Werkstückspindelachse 56 bzw. 76 drehbar ist.

Wie in Figur 1 und 2 dargestellt, ist das erfindungsgemäße Drehbearbeitungszentrum mit einer als Ganzes mit 100 bezeichneten Werkzeugträgereinheit versehen, die eine sich teilweise in dem Durchlass 32 erstreckende Werkzeugträgerbasis 102 und einen in dem Arbeitsraum 40 angeordneten Werkzeugträger 104 aufweist.

Der Werkzeugträger 104 sitzt dabei auf einem Führungsarm 106, welcher relativ zur Werkzeugträgerbasis 102 in Richtung einer Längsachse 108 des Führungsarms 106 verschiebbar in der Werkzeugträgerbasis 102 gelagert ist und außerdem in der Werkzeugträgerbasis 102 um die Längsachse 108 des Führungsarms 106 drehbar ist.

Hierzu ist vorzugsweise der Führungsarm 106 in einer Längs- und Drehführung 110 der Werkzeugträgerbasis 102 geführt.

Die Längs- und Drehführung 110 der Werkzeugträgerbasis 102 sitzt dabei auf einem Werkzeugträgerschlitten 112, welcher seinerseits an Schlittenführungen 114, 116 geführt ist.

Die Schlittenführungen114, 116 sitzen auf einer ersten Querseite 120 der ersten Säule 20, die dem Durchlass 32 und der gegenüberliegenden zweiten Säule 22 zugewandt ist.

Dabei erstrecken sich die Schlittenführungen 114, 116 vorzugsweise parallel zur Längsachse 24 der ersten Säule 20, so dass der Werkzeugträgerschlitten 112 in dem Durchlass 32 längs der ersten Säule 20 bewegbar ist, vorzugsweise in der X-Richtung.

Somit besteht die Möglichkeit, ein in dem Werkzeugträger 104 gehaltenes Werkzeug WZ1 in Richtung des in der ersten Werkstückspindel 54 gehaltenen Werkstücks W1 in X-Richtung zuzustellen.

Ferner ist die Längs- und Drehführung 110 für den Führungsarm 106 so auf dem Werkzeugträgerschlitten 112 angeordnet, dass, wie insbesondere in Figur 2 dargestellt, die Längsachse 108 des Führungsarms 106 quer zu den Schlittenführungen 114, 116 und somit auch quer zur Spindelebene 80 verläuft. Vorzugsweise verläuft die Längsachse 108 senkrecht zur Spindelführungsebene 80.

Damit ist der Werkzeugträger 104 nicht nur durch Bewegen des Werkzeugträgerschlittens 112 in der X-Richtung relativ zum Werkstück W1 bewegbar, sondern auch quer zu der X-Richtung in Richtung der Längsachse 108 und somit in einer Y-Richtung bewegbar sowie um die Längsachse 108, das heißt um eine sogenannte B-Achse, drehbar.

Insgesamt ist somit der Werkzeugträger 104 in einer Werkzeugführungsebene 118, die parallel zur X-Richtung und parallel zur Y-Richtung verläuft, bewegbar, wobei die Werkzeugführungsebene 118 quer, vorzugsweise senkrecht, zur Spindelführungsebene 80 verläuft.

Für die Bewegungen in der Y-Richtung und die Drehung um die B-Achse ist ein als Ganzes mit 122 bezeichnete Antriebseinheit vorgesehen, deren Gehäuse 124 an der Längs- und Drehführung 110 fixiert ist, und die auf einer dem Werkzeugträger 104 gegenüberliegenden Seite des Maschinenbettkörpers 18 angeordnet ist.

Bei dem in Figur 1 und 2 dargestellten ersten Ausführungsbeispiel ist der Werkzeugträger 104 als Werkzeugrevolver 130 ausgebildet und umfasst ein Revolvergehäuse 132, an welchem um eine Revolverachse 134 drehbar ein Revolverkopf 136 angeordnet ist.

Die Revolverachse 134 verläuft dabei quer, vorzugsweise senkrecht zur Längsachse 108 und schneidet die Längsachse 108 in einem Schnittpunkt 138, der vorzugsweise in einer Mittelebene 140 des Revolverkopfes 136 liegt.

Der Werkzeugrevolver 130 lässt sich vorzugsweise so einsetzen, dass stets das Revolvergehäuse 132 auf einer dem jeweiligen Werkstück abgewandten Seite steht. Durch Drehen des gesamten Werkzeugrevolvers 130 um die Längsachse 108 als Drehachse besteht somit die Möglichkeit, einmal die Werkzeuge des Revolverkopfes 136 zum Bearbeiten des Werkstücks W1, aufgenommen in der ersten Werkstückspindel 54, oder zum Bearbeiten des Werkstücks W2, aufgenommen in der zweiten Werkstückspindel 74, einzusetzen.

Bei der erfindungsgemäßen Konstruktion des Maschinenbettkörpers 18 ist insbesondere die Bearbeitung des in der ersten Werkstückspindel 54 aufgenommenen Werkstücks W1 mit den Werkzeugen des Werkzeugrevolvers 130 sehr genau, da sowohl die erste Werkstückspindeleinheit 50 als auch die gesamte Werkzeugträgereinheit 100 an dem ersten Ständer 20 gehalten sind, wobei die erste Frontseite 34 und die Querseite 120 zwar auf verschiedenen Seiten der Säule 20 liegen, jedoch in Umfangsrichtung der Säule 20 gesehen, aufeinanderfolgend angeordnet sind, so dass die Auswirkungen thermischer Ausdehnungen der Säule 20 auf die Genauigkeit der Bearbeitung gering sind und sich im Übrigen thermische Belastungen unwesentlich auf die Relativposition der ersten Frontseite 34 und der Querseite 120 auswirken.

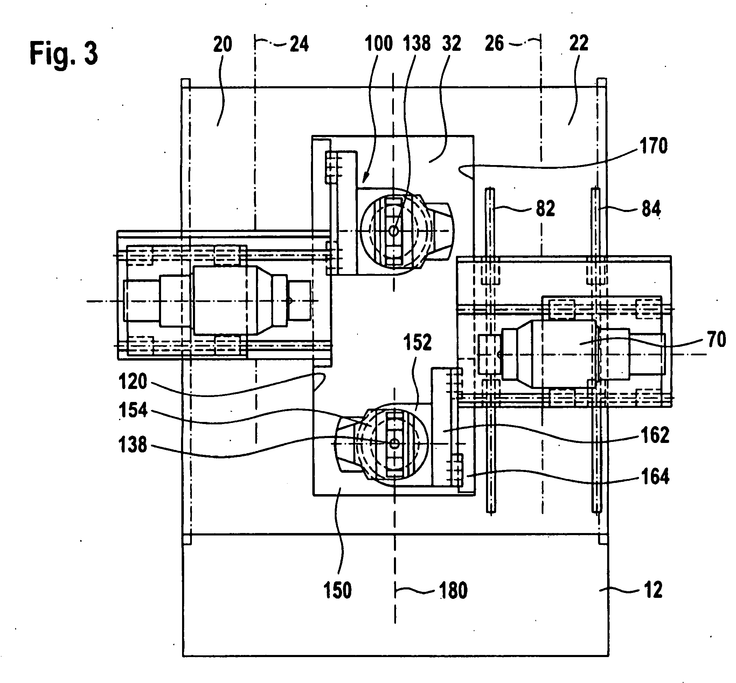

Bei einem zweiten Ausführungsbeispiel eines erfindungsgemäßen Drehbearbeitungszentrums, dargestellt in Figur 3, sind diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Im Gegensatz zum ersten Ausführungsbeispiel ist der Durchlass 32 in Richtung der Längsachsen 24, 26 der Säulen 20, 22 derart ausgedehnt, dass in diesem nicht nur die erste Werkzeugträgereinheit 100 vorgesehen werden kann, sondern eine zweite Werkzeugträgereinheit 150, welche in gleicher Weise wie die erste Werkzeugträgereinheit 100 eine Werkzeugträgerbasis 152 und einen Werkzeugträger 154 umfasst, wobei die Werkzeugträgerbasis 152 in gleicher Weise ausgebildet ist, wie die Werkzeugbasis 102, und insbesondere einen Werkzeugträgerschlitten 162 umfasst, der an Schlittenführungen 164, 166 gehalten ist, die an einer Querseite 170 der zweiten Säule 22 angeordnet sind, wobei die Querseite 170 den Durchlass 32 begrenzt und der Querseite 120 der ersten Säule 20 zugewandt ist.

Ferner sind die Schlittenführungen 164, 166 so ausgebildet, dass die zweite Werkzeugträgereinheit 150 im Wesentlichen kollisionsfrei zur ersten Werkzeugträgereinheit 100, geführt auf den Schlittenführungen 114 und 116, bewegbar ist, wobei in diesem Fall die zweite Werkzeugträgereinheit 150 zwischen der Gestellbasis 12 und der ersten Werkzeugträgereinheit 100 angeordnet ist.

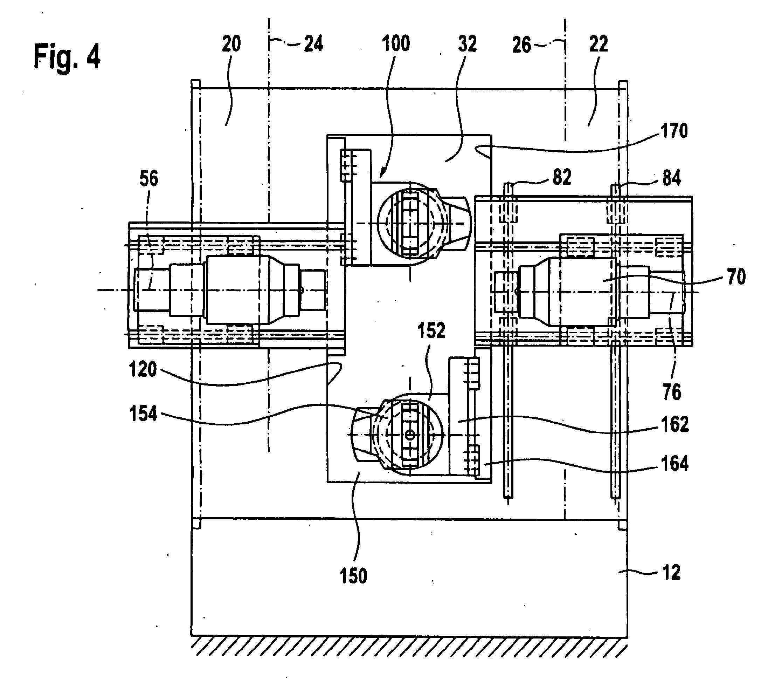

Bei dem zweiten Ausführungsbeispiel ist vorzugsweise die zweite Werkstückspindeleinheit 70 längs der Schlittenführungen 82, 84 so weit verfahrbar, dass diese einerseits in eine in Figur 4 dargestellte Übergabestellung bringbar ist, in welcher die zweite Werkstückspindelachse 76 koaxial zur ersten Werkstückspindelachse 56 ausgerichtet ist, so dass durch Verfahren der beiden Werkstückspindeleinheiten 50, 70 in Z-Richtung parallel zu ihren Werkstückspindelachsen 56, 76 das Werkstück W1 beispielsweise von der ersten Werkstückspindel 54 in die zweite Werkstückspindel 74 übergeben werden kann.

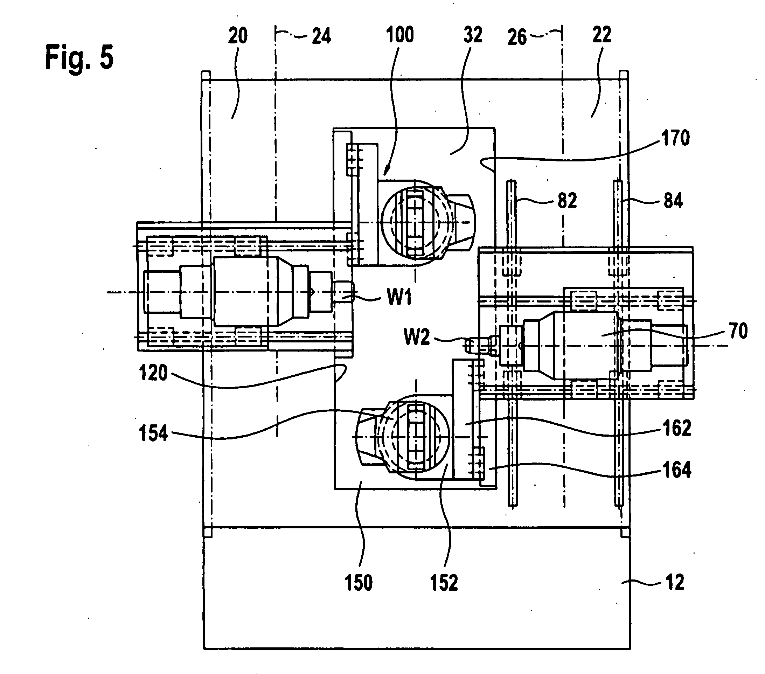

Von dieser Übergabestellung ist die zweite Werkstückspindeleinheit 70 dann durch Verfahren des Grundkörpers 62 längs der Schlittenführungen 82, 84 in eine in Figur 5 dargestellte Bearbeitungsstellung verfahrbar, in welcher das in der zweiten Werkstückspindel 74 gehaltene Werkstück W2 mittels eines Werkzeugs der zweiten Werkzeugträgereinheit 150 bearbeitbar ist.

Dabei ist entweder die zweite Werkzeugträgereinheit 150 in X-Richtung längs der Schlittenführungen 164, 166 verfahrbar oder die zweite Werkstückspindeleinheit 70 längs der Schlittenführungen 82, 84 in X-Richtung verfahrbar.

Es ist aber auch denkbar, sowohl die zweite Werkzeugträgereinheit 150 als auch die zweite Werkstückspindeleinheit 70 in X-Richtung gleichzeitig zu verfahren.

Darüber hinaus ist gleichzeitig die Bearbeitung eines Werkstücks W1, aufgenommen in der ersten Werkstückspindeleinheit 50, durch ein Werkzeug der ersten Werkzeugträgereinheit 100 durchführbar.

Bei dem erfindungsgemäßen Drehbearbeitungszentrum sind in der Bearbeitungsstellung die Werkstückspindeleinheiten 50, 70 relativ zueinander so weit verschoben, dass deren Werkstückspindelachsen 56, 76 zwar parallel zueinander und in der Spindelebene 80 verlaufen, jedoch in einer in der Spindelebene 80 quer zu den Werkstückspindelachsen 56, 76 verlaufenden Richtung, insbesondere der X-Richtung, zueinander versetzt sind.

Ferner sind vorzugsweise in der Bearbeitungsstellung die erste und zweite Werkzeugträgereinheit 100, 150 so angeordnet, dass zwischen diesen die Werkstückspindelachsen 56, 76 liegen, so dass in dem Raum zwischen den gegeneinander versetzten Werkstückspindelachsen 56, 76 kein Werkzeug angeordnet ist, sondern die Werkzeuge der Werkzeugträgereinheiten 100, 150 jeweils in X-Richtung von einer der jeweils anderen Spindelachse 76 bzw. 56 abgewandten Seite auf das jeweilige Werkstück W1 bzw. W2 in der jeweiligen Werkstückspindel 54 bzw. 74 zustellbar ist.

Vorzugsweise sind bei dem zweiten Ausführungsbeispiel die Werkzeugträgereinheiten 100, 150 so angeordnet, dass die Schnittpunkte 138 der Längsachsen 108 und der Revolverachsen 134 in einer gemeinsamen Bewegungsebene 180 liegen, wobei vorzugsweise auch die Längsachsen 108 der Führungsarme 106 in dieser Bewegungsebene 180 bewegbar sind.

Die Bewegungsebene 180 verläuft dabei insbesondere mittig durch den Durchlass 32 zwischen den Säulen 20, 22.

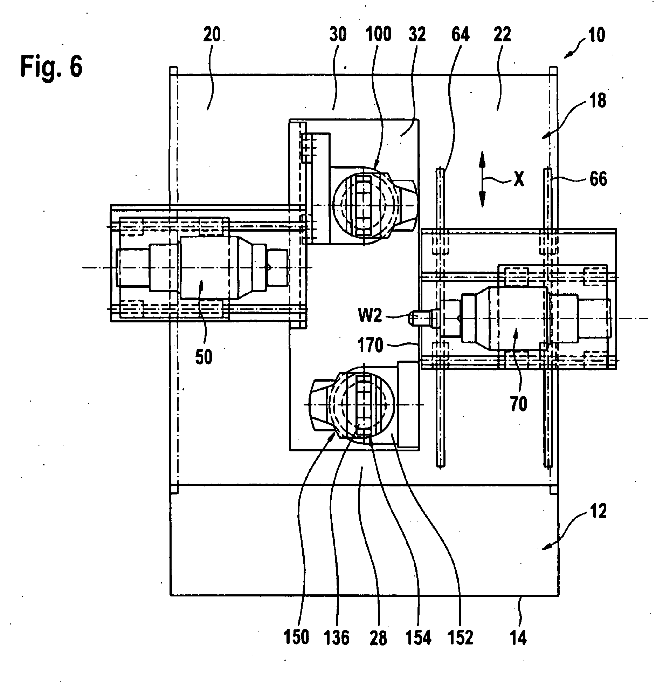

Bei einem dritten Ausführungsbeispiel, dargestellt in Figur 6, ist die zweite Werkzeugträgereinheit 150 stationär an der Querseite 170 der zweiten Säule 22 angeordnet und somit nicht verschiebbar.

Damit ist es zum Bearbeiten von in der zweiten Werkstückspindeleinheit 70 gehaltenen Werkstücken W2 erforderlich, die Bewegung in X-Richtung dadurch zu erzeugen, dass die zweite Werkstückspindeleinheit 70 in X-Richtung bewegt wird, und zwar durch Verschieben des Grundkörpers 62 auf den Schlittenführungen 82, 84.

Im Übrigen ist der Werkzeugträger 154 relativ zur Werkzeugträgerbasis 152 in gleicher Weise bewegbar, wie im Zusammenhang mit dem zweiten Ausführungsbeispiel beschrieben, so dass auch die Werkzeuge des Revolverkopfes 136 zur Bearbeitung des in der zweiten Werkstückspindeleinheit 70 gehaltenen Werkstücks W2 einsetzbar sind.

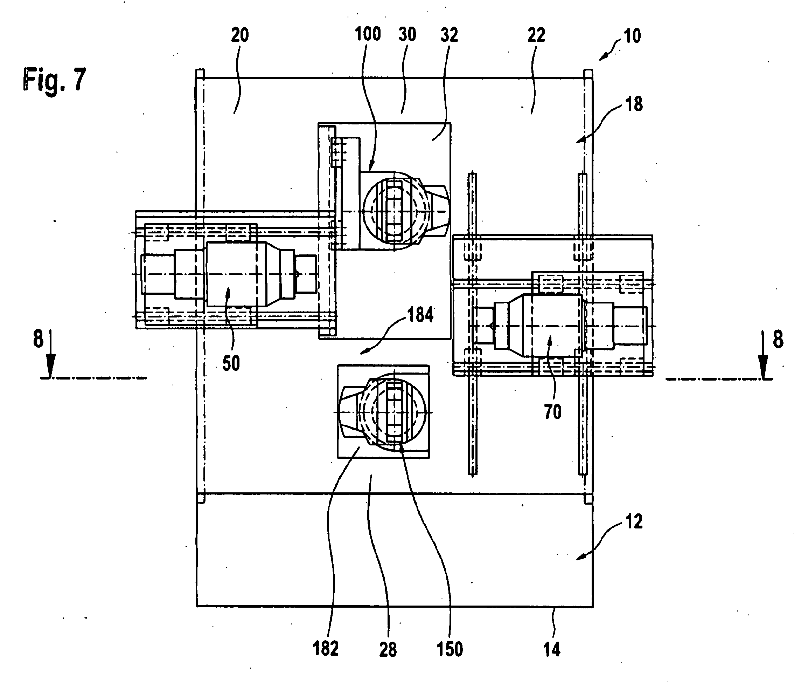

Bei einem vierten Ausführungsbeispiel, dargestellt in Figur 7, sind ebenfalls diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel ebenfalls Bezug genommen werden kann.

Im Gegensatz zum ersten Ausführungsbeispiel ist in dem Durchlass 32 zwischen den Säulen 20, 22 lediglich die erste Werkzeugträgereinheit 100 in X-Richtung bewegbar angeordnet, wie dies im Zusammenhang mit dem ersten Ausführungsbeispiel im Detail beschrieben wurde.

Ferner ist die zweite Werkzeugträgereinheit 150 in einem eigens für diese vorgesehenen Durchlass 182 zwischen den Säulen 20, 22 angeordnet, wobei die Durchlässe 182, 32 durch eine Querverstrebung 184 von einander getrennt sind, die zusätzlich zur Verbesserung der Steifigkeit des Maschinenbettkörpers 18 beiträgt.

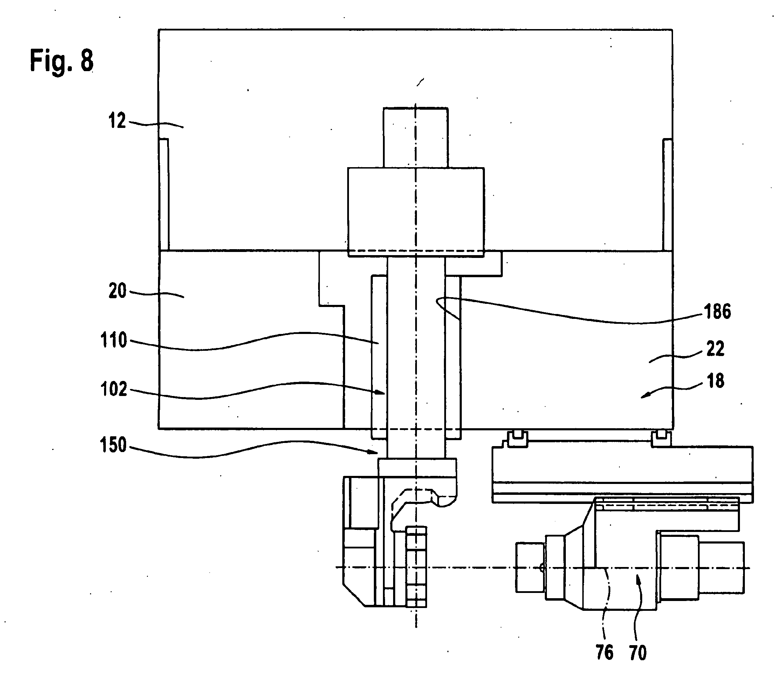

Wie in Figur 8 dargestellt, umfasst bei diesem Ausführungsbeispiel die Werkzeugträgerbasis 152 ebenfalls die Längs- und Drehführung 110, die ihrerseits jedoch unmittelbar mit einer an dem Durchlass 182 angrenzenden weiteren Querseite 186 der zweiten Säule 22 stationär gehalten ist.

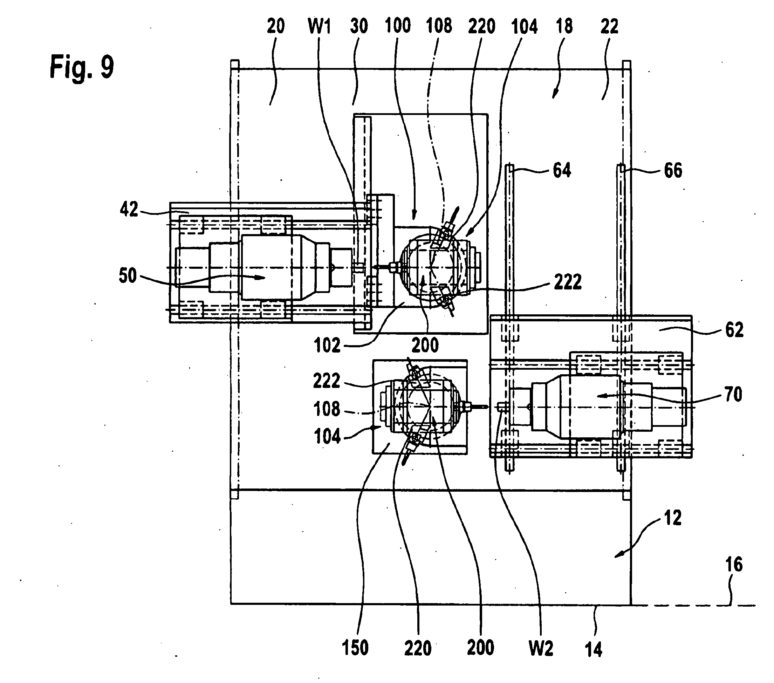

Bei einem fünften Ausführungsbeispiel, dargestellt in Figur 9, sind diejenigen Teile, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel oder dem zweiten und dritten Ausführungsbeispiel Bezug genommen wird.

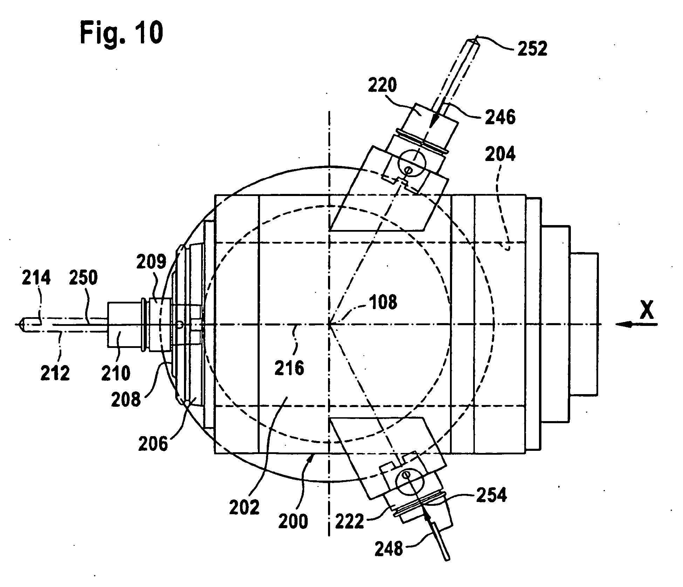

Im Gegensatz zu den voranstehenden Ausführungsbeispielen ist der Werkzeugträger 104, wie ergänzend in Figur 10 dargestellt, als Werkzeugspindel 200 ausgebildet, welche ein Werkzeugspindelgehäuse 202 aufweist, in welchem ein Spindelmotor 204 gelagert ist, der eine Spindelwelle 206 antreibt, in welche im Bereich eines vorderen Endes 208 in eine Werkzeughalteraufnahme 209 ein Werkzeughalter 210 einsetzbar ist. In der Spindelwelle 206 sitzt somit ein in dem Werkzeughalter 210 gehaltenes durch die Spindelwelle 206 rotierend antreibbares Werkzeug 212, wobei eine Werkzeugachse 214 koaxial zu einer Werkzeugspindelachse 216 verläuft, welche die Drehachse der Spindelwelle 206 darstellt.

Die Werkzeugspindel 200 hat beispielsweise eine Leistung von mindestens 8 kW und erreicht Drehzahlen größer 10.000 U/min.

Die Werkzeugachse 214 entspricht einer Werkzeugrichtung, festgelegt durch' die Vorschub- und/oder Zustellrichtungen bei der Bearbeitung des Werkstücks, und liegt dabei in einer Werkzeugebene 250, die durch die Längsachse 108 hindurch verläuft.

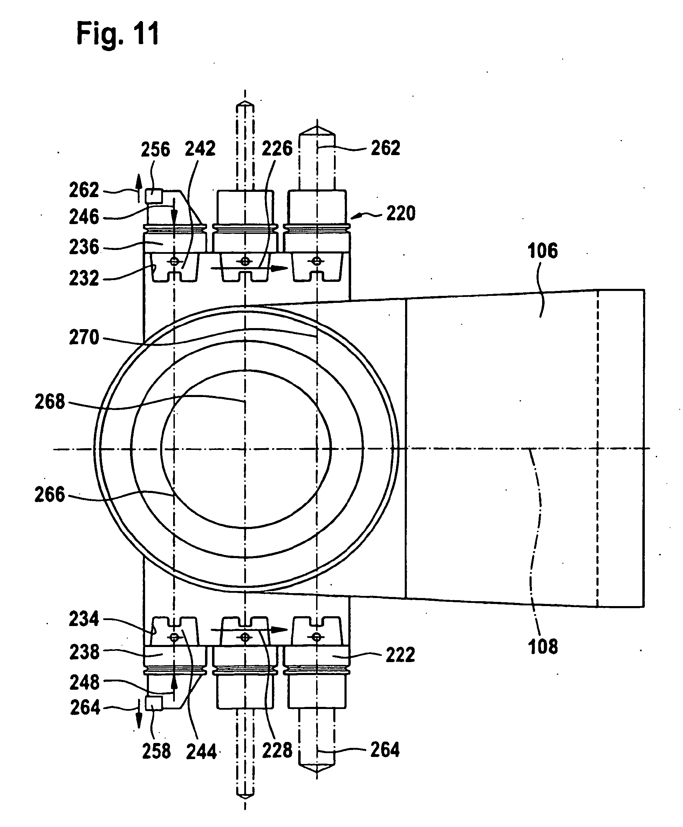

An dem Werkzeugspindelgehäuse 202 sind, wie ebenfalls in Figur 10 und 11 dargestellt, und zwar auf gegenüberliegenden Seiten der Längsachse 108 als Zusatzwerkzeugträger Linearwerkzeugträger 220, 222 angeordnet, welche jeweils in einer Reihenrichtung 226, 228 aufeinanderfolgend angeordnete Werkzeughalteraufnahmen 232, 234 aufweist, in welche Werkzeughalter 236, 238 einsetzbar sind.

Die Werkzeughalter 236, 238 sind alle so ausgebildet, dass jeder in die Werkzeughalteraufnahmen 232, 234 der Linearwerkzeugträger 220, 222 einsetzbare Einsetzkörper 242, 244 in einer Einsetzrichtung 246, 248 einsetzbar ist, die, wie insbesondere in Figur 10 dargestellt, in weiteren Werkzeugebenen 252, 254 liegen, welche auch durch die Längsachse 108 hindurch verlaufen, so dass und sich die Werkzeugebenen 250, 252 254 in der Längsachse 108 schneiden.

Außerdem verlaufen auch die Reihenrichtungen 226, 228 der Werkzeughalteraufnahmen 232, 234 parallel zu den Werkzeugebenen 252, 254.

Sämtliche Werkzeughalter 236, 238 sind mit Werkzeugen 256 bzw. 258 bestückt, die mindestens eine parallel zu der jeweiligen Werkzeugebene 252, 254 verlaufende Werkzeugrichtung 262, 264, festgelegt durch die Vorschub- und/oder Zustellrichtungen bei der Bearbeitung des Werkstücks, aufweisen, wobei die Werkzeugrichtungen 262, 264 vorzugsweise in den Werkzeugebenen 256, 258 liegen.

Ferner erstrecken sich die Werkzeugrichtungen 262, 264 quer, insbesondere senkrecht zu den Reihenrichtungen 226, 228.

Die Werkzeugebenen 252, 254 stehen vorzugsweise nicht senkrecht zur Werkzeugspindelachse 216 und zur Werkzeugebene 250, sondern schließen jeweils mit dieser einen Winkel von ungefähr 120° ein, so dass bezogen auf die Längsachse 108 zwischen der Werkzeugebene 250 und der Werkzeugebene 252 sowie zwischen der Werkzeugebene 250 und der Werkzeugebene 254 ein Winkel von 120° besteht und auf einer dem Werkzeug 212 abgewandten Seite die Werkzeugebenen 252, 254 ebenfalls einen Winkel von ungefähr 120° miteinander einschließen.

Außerdem sind die in der jeweiligen Reihenrichtung 226, 228 aufeinanderfolgend angeordneten Werkzeuge durch Verschieben der Werkzeugspindel 200 in Richtung der Längsachse 108 in Einsatz bringbar.

Ferner liegen, wie in Figur 11 dargestellt, die jeweils auf gegenüberliegenden Seiten der Längsachse 108 angeordnete Werkzeuge 256, 258 in senkrecht zur Längsachse 108 verlaufenden Ausrichtebenen 266, 268, 270, so dass je nach Position der Werkzeugspindel 200 die Werkzeuge 256, 258 an dem Werkstück in Einsatz bringbar sind, die in einer der Ausrichtebenen 266, 268, 270 liegen, wobei ein Wechsel des Werkzeugs allein durch Drehen der gesamten Werkzeugspindel 200 um die Längsachse 108 möglich ist.

Ferner ist vorzugsweise die Ausrichtebene 268 so angeordnet, dass in dieser nicht nur die Vorschubrichtungen 262, 264 der Werkzeuge 256, 258 der Linearwerkzeugträger 220, 222 liegen, sondern außerdem auch noch die Werkzeugachse 214 des Werkzeugs 212.

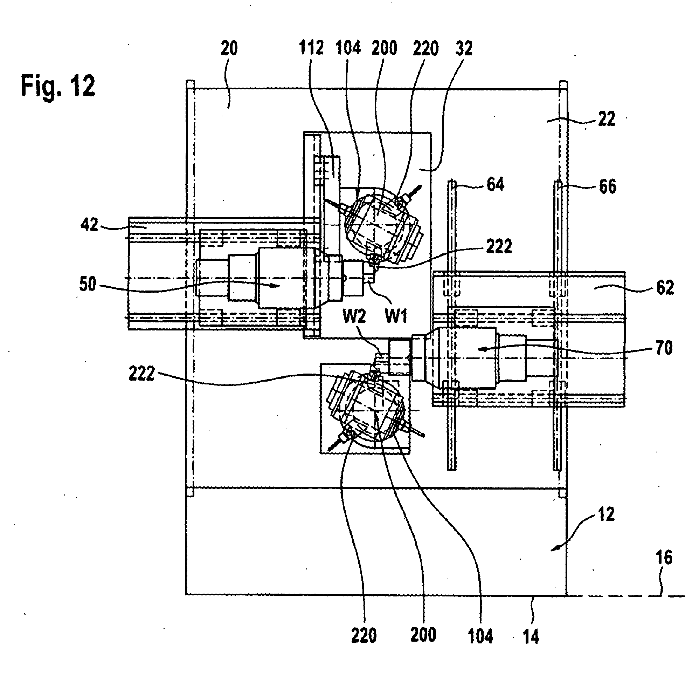

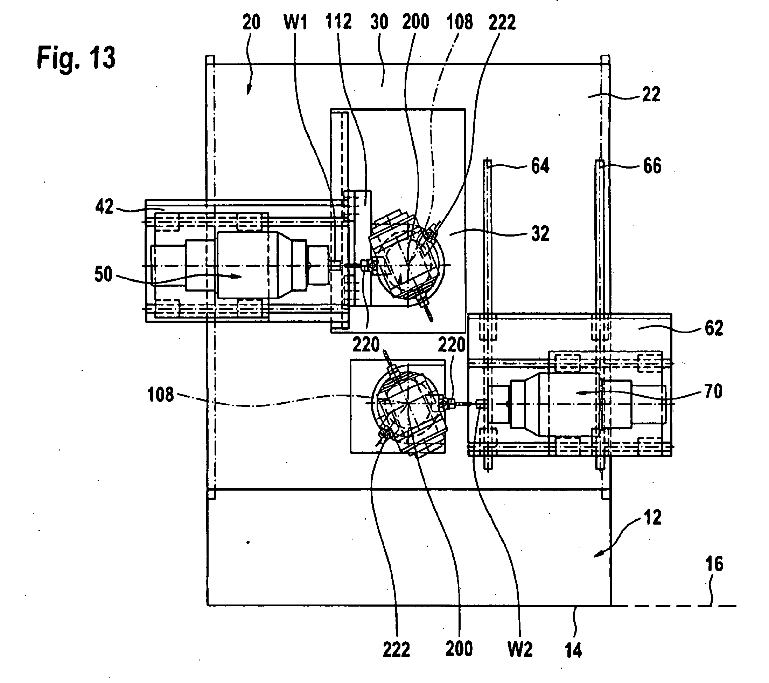

Der wechselnde Einsatz der verschiedenen Werkzeuge ist in den Figuren 12 und 13 dargestellt, wobei der Vorteil dieser Lösung darin besteht, dass die nicht im Einsatz am Werkstück befindlichen Werkzeuge bezogen auf die Längsachse 108 einen derartigen Winkelabstand voneinander aufweisen, dass diese die Bearbeitung des Werkstücks in der jeweiligen Werkstückspindeleinheit 50, 70 nicht behindern.

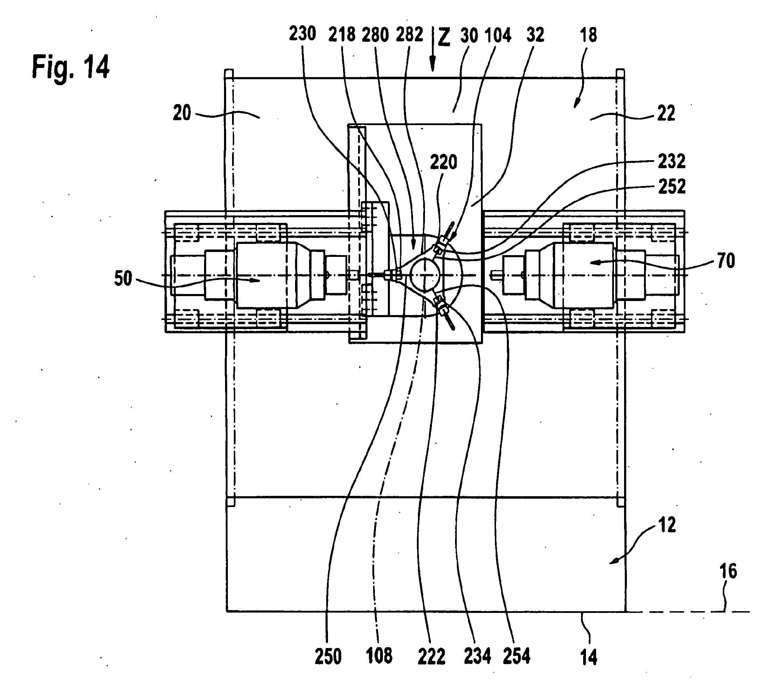

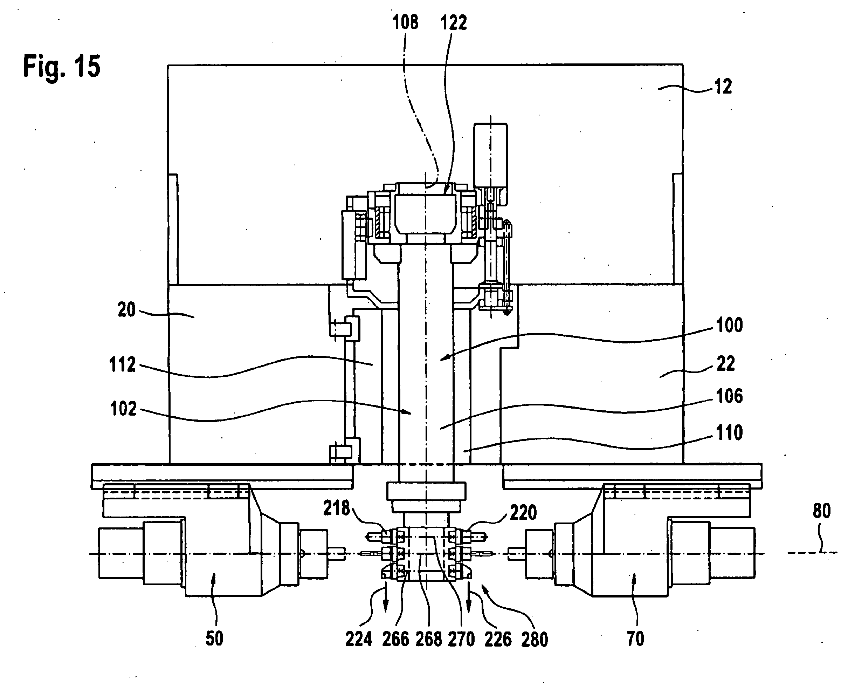

Bei einem sechsten Ausführungsbeispiel, dargestellt in Figur 14 und 15 sind ebenfalls diejenigen Elemente, die mit denen der voranstehenden Ausführungsbeispiele identisch sind, mit denselben Bezugszeichen versehen, so dass hinsichtlich derselben vollinhaltlich auf die Ausführungen zu den voranstehenden Ausführungsbeispielen Bezug genommen werden kann.

Bei dem sechsten Ausführungsbeispiel ist der Werkzeugträger 104 als Mehrfachlinearwerkzeugträger 280 ausgebildet, dass er ähnlich, wie beim vierten Ausführungsbeispiel, drei Werkzeugebenen 250, 252, 254 aufweist, die alle einen Winkel von 120° zwischen sich einschließen, und in welchen jeweils in der entsprechenden Reihenrichtung aufeinanderfolgend an Werkzeuge angeordnet sind, wobei auch in diesem Fall die Werkzeuge in aufeinanderfolgend angeordneten Ausrichtebenen 266, 268, 270 liegen.

Im Gegensatz zum vierten Ausführungsbeispiel sind jedoch alle Werkzeuge nicht angetriebene Werkzeuge. Diese werden lediglich als stehende Werkzeuge in Zusammenhang mit einer der Werkstückspindeleinheiten 50, 70 eingesetzt.

Ein Wechsel des jeweiligen Werkzeugs ist in einfacher Weise dadurch möglich, dass ein sämtliche Werkzeughalteraufnahmen tragender Basiskörper 282 des Mehrfachlinearwerkzeugträgers 280 um die Längsachse 108 drehbar und in Richtung der Längsachse 108 verschiebbar ist.

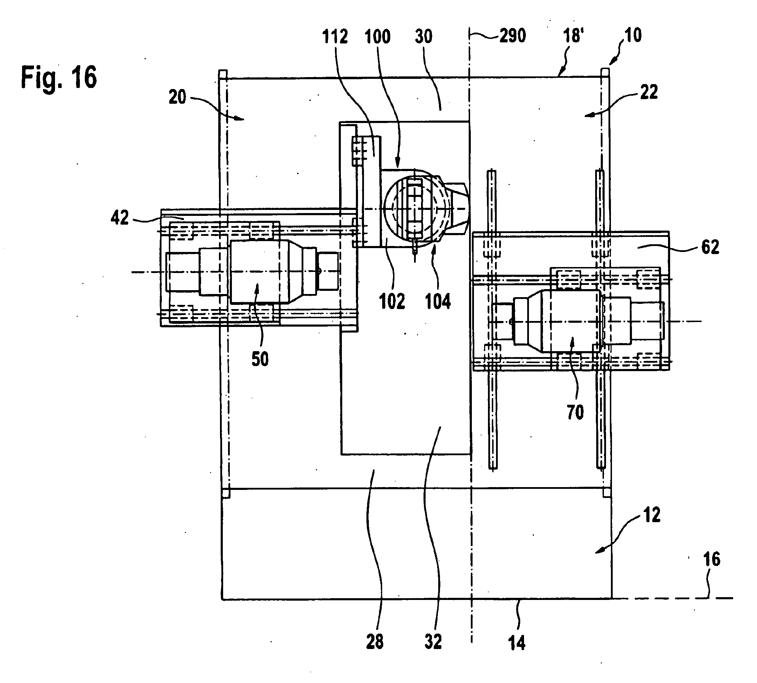

Bei einem siebten Ausführungsbeispiel, dargestellt in Figur 16, ist der Maschinenbettkörper 18' beispielsweise aus zwei Teilen zusammengesetzt. So wird ein Teil des Maschinenbettkörpers 18' durch die Säule 20 und die Querverstrebungen 28 und 30 gebildet, und das andere Teil durch die Säule 22, die längs einer Trennebene 290 von den Querverstrebungen 28, 30 trennbar ist, so dass der Maschinenbettkörper 18 einfach herstellbar und transportierbar ist.

Die im Rahmen der erfindungsgemäßen Ausführungsbeispiele beschriebenen Werkzeugträger 104 stellen lediglich Beispiele dar.

Im Rahmen der vorliegenden Erfindung können, je nach durchzuführender Bearbeitung Werkzeugrevolver 130, Werkzeugspindeln 200 und Mehrfachlinearwerkzeugträger 280 miteinander kombiniert werden.

Es ist außerdem noch möglich, anstelle der beschriebenen Beispiele für Werkzeugträger 104 anders geartete Werkzeugträger, wie beispielsweise Schleifeinheiten, einzusetzen.

## Patentansprüche

1. Drehbearbeitungszentrum umfassend ein Maschinengestell (10), eine am Maschinengestell (10) angeordnete erste Werkstückspindeleinheit (50) mit einer um eine Werkstückspindelachse (56) drehbaren ersten Werkstückspindel (54), eine am Maschinengestell (10) angeordnete zweite Werkstückspindeleinheit (70) mit einer um eine zweite Werkstückspindelachse (76) drehbaren zweiten Werkstückspindel (74), wobei die erste und die zweite Werkstückspindeleinheit (50, 70) parallel zu ihrer Werkstückspindelachse (56, 76) bewegbar an dem Maschinengestell (10) angeordnet sind, und die zweite Werkstückspindeleinheit (70) in X-Richtung quer zu ihrer Werkstückspindelachse (76) relativ zum Maschinengestell (10) von einer Werkstückübergabestellung in eine Bearbeitungsstellung bewegbar angeordnet ist, an dem Maschinengestell (10) angeordnete Werkzeugträgereinheiten (100, 150), an welchen mindestens ein Werkzeug zur Bearbeitung eines in den Werkstückspindeleinheiten (50, 70) gehaltenen Werkstücks angeordnet ist, wobei die der zweiten Werkstückspindeleinheit (70) zugeordnete Werkzeugträgereinheit (150) in Richtung der X-Achse stationär am Maschinengestell (10) angeordnet ist und einen Arbeitsraum (40), in welchem in den Werkstückspindeleinheiten (50, 70) gehaltene Werkstücke (W) mit dem Werkzeug bearbeitbar sind,
**dadurch gekennzeichnet, dass** die erste Werkstückspindeleinheit (50) quer zu ihrer Werkstückspindelachse (56) unbewegbar am Maschinengestell (10) angeordnet ist, dass die Werkstückspindeleinheiten (50, 70) in der Bearbeitungsstellung relativ zueinander in der X-Richtung versetzt angeordnet sind,
dass jeder der Werkstückspindeleinheiten (50, 70) in der Bearbeitungsstellung derselben eine eigene Werkzeugträgereinheit (100, 150) zugeordnet ist , so dass bei in der Bearbeitungsstellung stehender zweiter Werkstückspindeleinheit (70) mit jeder der Werkstückspindeleinheiten (50, 70) eine Werkstückbearbeitung unabhängig von der jeweils anderen Werkstückspindeleinheit (70, 50) ausführbar ist.

2. Drehbearbeitungszentrum nach Anspruch 1, **dadurch gekennzeichnet, dass** die der ersten Werkstückspindeleinheit (50) zugeordnete Werkzeugträgereinheit (100) relativ zur ersten Werkstückspindelachse in einer X-Richtung bewegbar ist.

3. Drehbearbeitungszentrum nach einem der voranstehenden Ansprüche,
**dadurch gekennzeichnet, dass** beide Werkstückspindeleinheiten (50, 70) mit ihren Werkstückspindelachsen (56, 76) in einer gemeinsamen geometrischen Spindelführungsebene (80) bewegbar sind.

4. Drehbearbeitungszentrum nach einem der voranstehenden Ansprüche,
**dadurch gekennzeichnet, dass** jede der Werkzeugträgereinheiten (100, 150) eine Werkzeugträgerbasis (102) und einen Werkzeugträger (104) aufweist.

5. Drehbearbeitungszentrum nach Anspruch 4, **dadurch gekennzeichnet, dass** die Werkzeugträgerbasis (102) zumindest teilweise in einen Durchlass (32, 182) des Maschinengestells (10) hineinragt.

6. Drehbearbeitungszentrum nach Anspruch 4 oder 5, **dadurch gekennzeichnet, dass** der Werkzeugträger (104) in einem frontseitig eines Maschinenbettkörpers (18) angeordneten Arbeitsraum (40) bewegbar ist.

7. Drehbearbeitungszentrum nach einem der Ansprüche 4 bis 6, **dadurch gekennzeichnet, dass** die Werkzeugträgereinheit (100, 150) eine Antriebseinheit (122) aufweist, die auf einer dem Werkzeugträger (104) gegenüberliegenden Seite der Werkzeugträgerbasis (102) angeordnet ist.

8. Drehbearbeitungszentrum nach einem der Ansprüche 4 bis 7, **dadurch gekennzeichnet, dass** die Antriebseinheit (122) auf einer dem Werkzeugträger (104) gegenüberliegenden Seite des Maschinenbettkörpers (18) angeordnet ist.

9. Drehbearbeitungszentrum nach einem der Ansprüche 4 bis 8, **dadurch gekennzeichnet, dass** die Antriebseinheit (122) auf einer dem Werkzeugträger (104) gegenüberliegenden Seite des Durchlasses (32) angeordnet ist.

10. Drehbearbeitungszentrum nach einem der Ansprüche 4 bis 9, **dadurch gekennzeichnet, dass** der Werkzeugträger (104) der jeweiligen Werkzeugträgereinheit (100, 150) parallel zu einer Werkzeugführungsebene (118) bewegbar ist, die quer zu der Werkstückspindelachse (56, 76) der dieser zugeordneten Werkstückspindeleinheit (50, 70) verläuft.

11. Drehbearbeitungszentrum nach Anspruch 10, **dadurch gekennzeichnet, dass** der Werkzeugträger (104) der mindestens einen Werkzeugträgereinheit (100, 150) in der Werkzeugführungsebene (118) in einer ersten, parallel zur Spindelführungsebene (80) verlaufenden Richtung (X) bewegbar ist.

12. Drehbearbeitungszentrum nach Anspruch 10 oder 11, **dadurch gekennzeichnet, dass** der Werkzeugträger (104) der mindestens einen Werkzeugträgereinheit (100, 150) in der Werkzeugführungsebene (118) in einer zweiten, senkrecht zur Spindelführungsebene (80) verlaufenden Richtung (Y) bewegbar ist.

13. Drehbearbeitungszentrum nach einem der Ansprüche 10 bis 12, **dadurch gekennzeichnet, dass** der Werkzeugträger (104) der mindestens einen Werkzeugträgereinheit (100, 150) um eine parallel zur Werkzeugführungsebene (118) verlaufenden Achse (B) drehbar ist.

14. Drehbearbeitungszentrum nach einem der Ansprüche 10 bis 13, **dadurch gekennzeichnet, dass** die Werkzeugträgerbasis (102) auf einem Werkzeugschlitten (112) angeordnet ist.

15. Drehbearbeitungszentrum nach Anspruch 14, **dadurch gekennzeichnet, dass** der Werkzeugschlitten (112)in einer Schlittenvorschubrichtung (X) bewegbar ist.

16. Drehbearbeitungszentrum nach Anspruch 14 oder 15, **dadurch gekennzeichnet, dass** der Werkzeugschlitten (112) in einer Schlittenvorschubrichtung (X) bewegbar ist, die ungefähr parallel zu einer Querrichtung zur jeweiligen Werkstückspindelachse (56, 76) verläuft.

17. Drehbearbeitungszentrum nach einem der Ansprüche 14 bis 16, **dadurch gekennzeichnet, dass** der Werkzeugschlitten (112) in einer X-Richtung des Drehbearbeitungszentrums bewegbar ist.

18. Drehbearbeitungszentrum nach einem der Ansprüche 4 bis 16, **dadurch gekennzeichnet, dass** der Werkzeugträger (104) gegenüber der Werkzeugträgerbasis (102) in einer Vorschubrichtung (Y) bewegbar ist.

19. Drehbearbeitungszentrum nach Anspruch 18, **dadurch gekennzeichnet, dass** die Vorschubrichtung (Y) ungefähr parallel zu einer Querrichtung zur jeweiligen Werkstückspindelachse (56, 76) verläuft.

20. Drehbearbeitungszentrum nach Anspruch 18 oder 19, **dadurch gekennzeichnet, dass** die Vorschubrichtung eine Y-Richtung des Drehbearbeitungszentrums ist.

21. Drehbearbeitungszentrum nach einem der Ansprüche 18 bis 20, **dadurch gekennzeichnet, dass** die Vorschubrichtung (Y) parallel zu einer Querrichtung zur Schlittenvorschubrichtung (X) verläuft.

22. Drehbearbeitungszentrum nach einem der Ansprüche 4 bis 21, **dadurch gekennzeichnet, dass** der Werkzeugträger (104) gegenüber der Werkzeugträgerbasis (102) um eine Drehachse (B) drehbar ist.

23. Drehbearbeitungszentrum nach Anspruch 22, **dadurch gekennzeichnet, dass** die Drehachse (B) ungefähr parallel zu der Vorschubrichtung (Y) verläuft.

24. Drehbearbeitungszentrum nach Anspruch 22 oder 23, **dadurch gekennzeichnet, dass** die Drehachse (B) in einer Richtung (Y) verläuft, die parallel zu einer Querrichtung zur jeweiligen Werkstückspindelachse (56, 76) ausgerichtet ist.

25. Drehbearbeitungszentrum nach einem der Ansprüche 22 bis 24, **dadurch gekennzeichnet, dass** die Drehachse eine B-Achse des Drehbearbeitungszentrums ist.

26. Drehbearbeitungszentrum nach einem der Ansprüche 4 bis 25, **dadurch gekennzeichnet, dass** der Werkzeugträger (104) durch einen Führungsarm (106) mit der Werkzeugträgerbasis (102) verbunden ist.

27. Drehbearbeitungszentrum nach einem der Ansprüche 4 bis 26, **dadurch gekennzeichnet, dass** der Werkzeugträger (104) als Werkzeugspindel (200) ausgebildet ist.

28. Drehbearbeitungszentrum nach Anspruch 27, **dadurch gekennzeichnet, dass** ein Werkzeugspindelgehäuse (202) an dem Führungsarm (106) gehalten ist.

29. Drehbearbeitungszentrum nach Anspruch 28, **dadurch gekennzeichnet, dass** das Werkzeugspindelgehäuse (202) fest mit einem vorderen Ende des Führungsarms (106) verbunden ist.

30. Drehbearbeitungszentrum nach einem der Ansprüche 27 bis 29, **dadurch gekennzeichnet, dass** die Werkzeugspindel (200) eine quer zu der Drehachse (108) ausgerichtete Werkzeugspindelachse (216) aufweist.

31. Drehbearbeitungszentrum nach einem der Ansprüche 27 bis 30, **dadurch gekennzeichnet, dass** die Werkzeugspindel (200) eine quer zu der Vorschubrichtung (Y) ausgerichtete Werkzeugspindelachse (216) aufweist.

32. Drehbearbeitungszentrum nach einem der Ansprüche 27 bis 31, **dadurch gekennzeichnet, dass** eine in dem Werkzeugspindelgehäuse (202) gelagerte Spindelwelle (206) an einem Ende (208) eine Werkzeugaufnahme (209) trägt.

33. Drehbearbeitungszentrum nach Anspruch 32, **dadurch gekennzeichnet, dass** die Werkzeugaufnahme (209) auf einer Seite der Drehachse (108) angeordnet ist.

34. Drehbearbeitungszentrum nach einem der Ansprüche 27 bis 33, **dadurch gekennzeichnet, dass** das Werkzeugspindelgehäuse (202) einen Zusatzwerkzeugträger (220, 222) aufweist.

35. Drehbearbeitungszentrum nach Anspruch 34, **dadurch gekennzeichnet, dass** der Zusatzwerkzeugträger (220, 222) an dem Werkzeugspindelgehäuse (202) auf mindestens einer Seite der Werkzeugspindelachse (216) angeordnet ist.

36. Drehbearbeitungszentrum nach Anspruch 34 oder 35, **dadurch gekennzeichnet, dass** das Werkzeugspindelgehäuse (202) auf mehreren Seiten einen Zusatzwerkzeugträger (220, 222) trägt.

37. Drehbearbeitungszentrum nach Anspruch 36, **dadurch gekennzeichnet, dass** das Werkzeugspindelgehäuse (202) auf einander gegenüberliegenden Seiten einen Zusatzwerkzeugträger (220, 222) trägt.

38. Drehbearbeitungszentrum nach Anspruch 37, **dadurch gekennzeichnet, dass** die Zusatzwerkzeugträger (220, 222) auf gegenüberliegenden Seiten der Drehachse (108) angeordnet sind.

39. Drehbearbeitungszentrum nach einem der Ansprüche 34 bis 38, **dadurch gekennzeichnet, dass** die Zusatzwerkzeugträger (220, 222) als Mehrfachwerkzeugträger ausgebildet sind.

40. Drehbearbeitungszentrum nach Anspruch 39, **dadurch gekennzeichnet, dass** der Mehrfachwerkzeugträger als Linearwerkzeugträger (220, 222) ausgebildet ist.

41. Drehbearbeitungszentrum nach Anspruch 40, **dadurch gekennzeichnet, dass** der Linearwerkzeugträger (220, 222) in einer zur Vorschubrichtung der Werkzeugträgerspindel (200) parallelen Reihenrichtung (226, 228) aufgereihte Werkzeugaufnahmen (232, 234) aufweist.

42. Drehbearbeitungszentrum nach Anspruch 40 oder 41, **dadurch gekennzeichnet, dass** alle Werkzeugaufnahmen (232, 234) des Linearwerkzeugträgers (220, 222) in einer Werkzeugebene (252, 254) liegen.

43. Drehbearbeitungszentrum nach Anspruch 42, **dadurch gekennzeichnet, dass** eine Werkzeugebene (250) der Werkzeugspindel (200) und die Werkzeugebenen (252, 254) der Linearwerkzeugträger (220, 222) jeweils einen Winkel miteinander einschließen, der größer als 90° ist.

44. Drehbearbeitungszentrum nach Anspruch 42 oder 43, **dadurch gekennzeichnet, dass** jeweils zwei der Werkzeugebenen (250, 252, 254) einen Winkel miteinander einschließen, der größer als 90° ist.

45. Drehbearbeitungszentrum nach einem der Ansprüche 4 bis 44, **dadurch gekennzeichnet, dass** der Werkzeugträger (104) als Mehrfachlinearwerkzeugträger (280) ausgebildet ist.

46. Drehbearbeitungszentrum nach Anspruch 45, **dadurch gekennzeichnet, dass** der Mehrfachlinearwerkzeugträger (280) Linearwerkzeugträger (218, 220, 222) umfasst, die in einer zur Vorschubrichtung des Mehrfachlinearwerkzeugträgers (280) parallelen Reihenrichtung (226, 228) aufgereihte Werkzeugaufnahmen (232, 234) aufweisen.

47. Drehbearbeitungszentrum nach Anspruch 45 oder 46, **dadurch gekennzeichnet, dass** alle Werkzeugaufnahmen (232, 234) jedes der Linearwerkzeugträger (220, 222) in einer Werkzeugebene (250, 252, 254) liegen.

48. Drehbearbeitungszentrum nach Anspruch 47, **dadurch gekennzeichnet, dass** jeweils zwei der Werkzeugebenen (250, 252, 254) einen Winkel miteinander einschließen, der größer als 90° ist.

49. Drehbearbeitungszentrum nach einem der Ansprüche 4 bis 48, **dadurch gekennzeichnet, dass** der Werkzeugträger (104) als Werkzeugrevolver (130) ausgebildet ist.

50. Drehbearbeitungszentrum nach Anspruch 49, **dadurch gekennzeichnet, dass** der Werkzeugrevolver (130) einen Revolverkopf (136) aufweist, der um eine Revolverachse (134) drehbar ist.

51. Drehbearbeitungszentrum nach Anspruch 50, **dadurch gekennzeichnet, dass** die Revolverachse (134) die Drehachse, um welche der Werkzeugrevolver (130) gegenüber der Werkzeugträgerbasis (102) drehbar ist, schneidet.

52. Drehbearbeitungszentrum nach einem der Ansprüche 49 bis 51, **dadurch gekennzeichnet, dass** ein Revolvergehäuse (132) des Werkzeugrevolvers (130) fest mit dem Führungsarm (106) verbunden ist.

53. Drehbearbeitungszentrum nach einem der Ansprüche 50 bis 52, **dadurch gekennzeichnet, dass** der Revolverkopf (136) Werkzeugaufnahmen aufweist, die so angeordnet sind, dass Werkzeugrichtungen von in diesem eingesetzten Werkzeugen in einer Werkzeugebene (140) liegen.

54. Drehbearbeitungszentrum nach Anspruch 53, **dadurch gekennzeichnet, dass** die Werkzeugebene (140) senkrecht zur Revolverachse (134) verläuft.

55. Drehbearbeitungszentrum nach Anspruch 53 oder 54, **dadurch gekennzeichnet, dass** die Drehachse (108), um welche der Werkzeugrevolver (130) gegenüber der Werkzeugträgerbasis (102) drehbar ist, parallel zur Werkzeugebene verläuft.

56. Drehbearbeitungszentrum nach einem der Ansprüche 53 bis 55, **dadurch gekennzeichnet, dass** ein Schnittpunkt der Drehachse (108) und der Revolverachse (134) in der Werkzeugebene (140) liegt.

57. Drehbearbeitungszentrum nach einem der voranstehenden Ansprüche,
**dadurch gekennzeichnet, dass** das Maschinengestell (10) einen aus zwei in Abstand voneinander angeordneten Säulen (20, 22) gebildeten Maschinenbettkörper (18) aufweist.

58. Drehbearbeitungszentrunn nach Anspruch 57, **dadurch gekennzeichnet, dass** sich die Säulen (20, 22) mit ihren Längsachsen (24, 26) quer zu einer Standfläche (16) des Maschinengestells (10) erstrecken.

59. Drehbearbeitungszentrum nach Anspruch 57 oder 58, **dadurch gekennzeichnet, dass** sich die Säulen (20, 22) parallel zueinander erstrecken.

60. Drehbearbeitungszentrum nach Anspruch 57 oder 59, **dadurch gekennzeichnet, dass** die Säulen (20, 22) sich im Wesentlichen senkrecht zur Standfläche (16) erstrecken.

61. Drehbearbeitungszentrum nach einem der Ansprüche 57 bis 60, **dadurch gekennzeichnet, dass** die Säulen (20, 22) ungefähr gleiche Längen aufweisen.

62. Drehbearbeitungszentrum nach einem der Ansprüche 57 bis 61, **dadurch gekennzeichnet, dass** zwischen den Säulen (20, 22) mindestens ein Durchlass (32, 182) vorgesehen ist.

63. Drehbearbeitungszentrum nach einem der Ansprüche 57 bis 62, **dadurch gekennzeichnet, dass** die Säulen (20, 22) miteinander durch mindestens eine Querverstrebung (28, 30) verbunden sind.

64. Drehbearbeitungszentrum nach Anspruch 63, **dadurch gekennzeichnet, dass** die Säulen (20, 22) endseitig durch die mindestens eine Querverstrebung (30) verbunden sind.

65. Drehbearbeitungszentrum nach Anspruch 64, **dadurch gekennzeichnet, dass** die mindestens eine Querverstrebung (30) an mindestens einer der Säulen angeformt ist.

66. Drehbearbeitungszentrum nach einem der Ansprüche 57 bis 65, **dadurch gekennzeichnet, dass** die Säulen (20, 22) zu einem jochähnlichen Körper (18) verbunden sind.

67. Drehbearbeitungszentrum nach Anspruch 66, **dadurch gekennzeichnet, dass** der jochähnliche Körper (18) mindestens einen Durchlass (32, 182) umschließt.

68. Drehbearbeitungszentrum nach Anspruch 67, **dadurch gekennzeichnet, dass** der jochähnliche Körper zwei Durchlässe (32, 182) umschließt.

69. Drehbearbeitungszentrum nach einem der Ansprüche 57 bis 68, **dadurch gekennzeichnet, dass** die Säulen (20, 22) abgeflachte Frontseiten (34, 36) aufweisen.

70. Drehbearbeitungszentrum nach einem der Ansprüche 57 bis 69, **dadurch gekennzeichnet, dass** die jeweilige Frontseite (34, 36) quer zur Standfläche (16) des Maschinengestells (10) verläuft.

71. Drehbearbeitungszentrum nach einem der Ansprüche 57 bis 70, **dadurch gekennzeichnet, dass** die Säulen (20, 22) einander zugewandte abgeflachte Querseiten (120, 170) aufweisen.

72. Drehbearbeitungszentrum nach Anspruch 71, **dadurch gekennzeichnet, dass** die erste und zweite Querseite (120, 170) auf gegenüberliegenden Seiten des Durchlasses (32, 182) angeordnet sind.

73. Drehbearbeitungszentrum nach einem der Ansprüche 57 bis 72, **dadurch gekennzeichnet, dass** die Querseiten (120, 170) quer zu einer Standfläche (16) des Maschinengestells (10) verlaufen.

74. Drehbearbeitungszentrum nach einem der Ansprüche 57 bis 73, **dadurch gekennzeichnet, dass** die Säulen (20, 22) eine ungefähr rechteckige Querschnittsform aufweisen.

75. Drehbearbeitungszentrum nach einem der Ansprüche 57 bis 74, **dadurch gekennzeichnet, dass** die erste Werkstückspindeleinheit (50) an einer dem Arbeitsraum (40) zugewandten Frontseite (34) einer ersten (20) der Säulen angeordnet ist.

76. Drehbearbeitungszentrum nach einem der Ansprüche 57 bis 75, **dadurch gekennzeichnet, dass** die zweite Werkstückspindeleinheit (70) an einer dem Arbeitsraum (40) zugewandten Frontseite (36) einer zweiten (22) der Säulen angeordnet ist.

77. Drehbearbeitungszentrum nach Anspruch 75 oder 76, **dadurch gekennzeichnet, dass** mindestens eine der Werkstückspindeleinheiten (50, 70) parallel zu der jeweiligen Frontseite (34, 36) relativ zum Maschinenbettkörper (18) bewegbar geführt ist.

78. Drehbearbeitungszentrum nach Anspruch 77, **dadurch gekennzeichnet, dass** jede der Werkstückspindeleinheiten (50, 70) parallel zu der diese jeweils tragenden Frontseite (34, 36) relativ zum Maschinenbettkörper bewegbar geführt ist.

79. Drehbearbeitungszentrum nach einem der Ansprüche 57 bis 78, dadurch dass mindestens eine Werkzeugträgereinheit (100, 150) an einer der jeweils anderen Säule (22, 20) zugewandten Querseite (120, 170) einer der Säulen (20, 22) angeordnet ist.

80. Drehbearbeitungszentrum nach Anspruch 79, **dadurch gekennzeichnet, dass** jede der zwei Werkzeugträgereinheiten (100, 150) an einer Querseite (120, 170) einer der Säulen (20, 22) des Maschinenbettkörpers (18) angeordnet ist.

81. Drehbearbeitungszentrum nach Anspruch 79 oder 80, **dadurch gekennzeichnet, dass** die Werkzeugträgereinheiten (100, 150) an unterschiedlichen Säulen (20, 22) des Maschinenbettkörpers (18) angeordnet sind.

82. Drehbearbeitungszentrum nach einem der Ansprüche 79 bis 81, **dadurch gekennzeichnet, dass** die erste Werkzeugträgereinheit (100) der ersten Werkstückspindeleinheit (50) zugeordnet ist.

83. Drehbearbeitungszentrum nach einem der Ansprüche 79 bis 82, **dadurch gekennzeichnet, dass** die erste Werkzeugträgereinheit (100) an der die erste Werkstückspindeleinheit (50) tragenden Säule (20) angeordnet ist.

84. Drehbearbeitungszentrum nach einem der Ansprüche 79 bis 83, **dadurch gekennzeichnet, dass** die zweite Werkzeugträgereinheit (150) der zweiten Werkstückspindeleinheit (70) zugeordnet ist.

85. Drehbearbeitungszentrum nach einem der Ansprüche 79 bis 84, **dadurch gekennzeichnet, dass** die zweite Werkzeugträgereinheit (150) an der die zweite Werkstückspindeleinheit (70) tragenden Säule (22) angeordnet ist.

86. Drehbearbeitungszentrum nach einem der Ansprüche 79 bis 85, **dadurch gekennzeichnet, dass** sich die Werkzeugträgereinheit (100, 150) in dem jeweiligen Durchlass (32, 182) hinein erstreckt.

87. Drehbearbeitungszentrum nach Anspruch 86, **dadurch gekennzeichnet, dass** sich die Werkzeugträgereinheit durch den jeweiligen Durchlass (32, 182) hindurch erstreckt.

## Claims

1. Turning centre comprising
a machine frame (10),
a first workpiece spindle unit (50), which is disposed on the machine frame (10) and has a first workpiece spindle (54) that is rotatable about a workpiece spindle axis (56),
a second workpiece spindle unit (70), which is disposed on the machine frame (10) and has a second workpiece spindle (74) that is rotatable about a second workpiece spindle axis (76),
the first and the second workpiece spindle units (50, 70) being disposed on the machine frame (10) to be movable parallel to the their workpiece spindle axis (56, 76),
and the second workpiece spindle unit (70) being arranged to be movable relative to the machine frame (10) transversely to its workpiece spindle axis (76) from a workpiece transfer position into a machining position,
tool carrier units (100, 150) disposed on the machine frame (10) and on which at least one tool for machining a workpiece held in the workpiece spindle units (50, 70) is disposed,
the tool carrier unit (150) associated with the second workpiece spindle unit (70) being disposed on the machine frame (10) to be fixed in the direction of the X-axis,
and a working space (40), in which workpieces (W) held in the workpiece spindle units (50, 70) can be machined by the tool,
**characterized in that** the first workpiece spindle unit (50) is disposed on the machine frame (10) to be non-movable transversely to its workpiece spindle axis (56),
**in that** the workpiece spindle units (50, 70) are disposed offset in the X-direction relative to one another in the machining position,
**in that** for each of the workpiece spindle units (50, 70), an individual tool carrier unit (100, 150) is associated with a respective said unit in the machining position, so that when a second workpiece spindle unit (70) is stationary in the machining position, a workpiece machining operation can be carried out with each of the workpiece spindle units (50, 70) independently of the respective other workpiece spindle unit (70, 50).

2. Turning centre according to Claim 1, **characterized**
**in that** the tool carrier unit (100) associated with the first workpiece spindle unit (50) is movable in an X-direction relative to the first workpiece spindle axis.

3. Turning centre according to either of the preceding claims, **characterized in that** the two workpiece spindle units (50, 70) with their workpiece spindle axes (56, 76) are movable in a common geometrical spindle guiding plane (80).

4. Turning centre according to any of the preceding claims, **characterized in that** each of the tool carrier units (100, 150) has a tool carrier base (102) and a tool carrier (104).

5. Turning centre according to Claim 4, **characterized**
**in that** the tool carrier base (102) is movable at least in part into an opening (32, 182) in the machine base (10).

6. Turning centre according to Claim 4 or 5, **characterized in that** the tool carrier (104) is movable in a working space (40) that is disposed at the front of a machine bed (18).

7. Turning centre according to any of Claims 4 to 6, **characterized in that** the tool carrier unit (100, 150) has a drive unit (122), which is disposed on a side of the tool carrier base (102) that is opposite from the tool carrier (104).

8. Turning centre according to any of Claims 4 to 7, **characterized in that** the drive unit (122) is disposed on a side of the machine bed (18) that is opposite from the tool carrier (104).

9. Turning centre according to any of Claims 4 to 8, **characterized in that** the drive unit (122) is disposed on a side of the opening (32) that is opposite from the tool carrier (104).

10. Turning centre according to any of Claims 4 to 9, **characterized in that** the tool carrier (104) of the respective tool carrier unit (100, 150) is movable parallel to a tool guiding plane (118), which runs transversely to the workpiece spindle axis (56, 76) of the workpiece spindle unit (50, 70) associated with this spindle axis.

11. Turning centre according to Claim 10, **characterized in that** the tool carrier (104) of the at least one tool carrier unit (100, 150) is movable in the tool guiding plane (118) in a first direction (X) that runs parallel to the spindle guiding plane (80).

12. Turning centre according to Claim 10 or 11, **characterized in that** the tool carrier (104) of the at least one tool carrier unit (100, 150) is movable in the tool guiding plane (118) in a second direction (Y) that runs perpendicular to the spindle guiding plane (80).

13. Turning centre according to any of Claims 10 to 12, **characterized in that** the tool carrier (104) of the at least one tool carrier unit (100, 150) is rotatable about an axis (B) that runs parallel to the tool guiding plane (118).

14. Turning centre according to any of Claims 10 to 13, **characterized in that** the tool carrier base (102) is disposed on a tool slide (112).

15. Turning centre according to Claim 14, **characterized in that** the tool slide (112) is movable in a direction (X) of slide advance.

16. Turning centre according to Claim 14 or 15, **characterized in that** the tool slide (112) is movable in a direction (X) of slide advance, which runs approximately parallel to a transverse direction of the respective workpiece spindle axis (56, 76).

17. Turning centre according to any of Claims 14 to 16, **characterized in that** the tool slide (112) is movable in an X direction of the turning centre.

18. Turning centre according to any of Claims 4 to 16, **characterized in that** the tool carrier (104) is movable in a direction (Y) of advance with respect to the tool carrier base (102).

19. Turning centre according to Claim 18, **characterized in that** the direction (Y) of advance runs approximately parallel to a transverse direction in relation to the respective workpiece spindle axis (56, 76).

20. Turning centre according to Claim 18 or 19, **characterized in that** the direction of advance is a Y direction of the turning centre.

21. Turning centre according to any of Claims 18 to 20, **characterized in that** the direction (Y) of advance runs parallel to a transverse direction in relation to the direction (X) of slide advance.

22. Turning centre according to any of Claims 4 to 21, **characterized in that** the tool carrier (104) is rotatable about an axis of rotation (B) with respect to the tool carrier base (102) .

23. Turning centre according to Claim 22, **characterized in that** the axis of rotation (B) runs approximately parallel to the direction (Y) of advance.

24. Turning centre according to Claim 22 or 23, **characterized in that** the axis of rotation (B) runs in a direction (Y) which is aligned parallel to a transverse direction in relation to the respective workpiece spindle axis (56, 76).

25. Turning centre according to any of Claims 22 to 24, **characterized in that** the axis of rotation is a B-axis of the turning centre.

26. Turning centre according to any of Claims 4 to 25, **characterized in that** the tool carrier (104) is connected to the tool carrier base (102) by a guiding arm (106).

27. Turning centre according to any of Claims 4 to 26, **characterized in that** the tool carrier (104) is formed as a tool spindle (200).

28. Turning centre according to Claim 27, **characterized in that** a tool spindle housing (202) is held on the guiding arm (106).

29. Turning centre according to Claim 28, **characterized in that** the tool spindle housing (202) is fixedly connected to a front end of the guiding arm (106).

30. Turning centre according to any of Claims 27 to 29, **characterized in that** the tool spindle (200) has a tool spindle axis (216) aligned transversely to the axis of rotation (108).

31. Turning centre according to any of Claims 27 to 30, **characterized in that** the tool spindle (200) has a tool spindle axis (216) that is aligned transversely to the direction (Y) of advance.

32. Turning centre according to any of Claims 27 to 31, **characterized in that** a spindle shaft (206) mounted in the tool spindle housing (202) carries a tool receiving means (209) at one end (208).

33. Turning centre according to Claim 32, **characterized in that** the tool receiving means (209) is disposed on one side of the axis of rotation (108).

34. Turning centre according to any of Claims 27 to 33, **characterized in that** the tool spindle housing (202) has a supplementary tool carrier (220, 222).

35. Turning centre according to Claim 34, **characterized in that** the supplementary tool carrier (220, 222) is disposed on the tool spindle housing (202) on at least one side of the tool spindle axis (216).

36. Turning centre according to Claim 34 or 35, **characterized in that** the tool spindle housing (202) carries a supplementary tool carrier (220, 222) on more than one side.

37. Turning centre according to Claim 36, **characterized in that** the tool spindle housing (202) carries a supplementary tool carrier (220, 222) on mutually opposite sides.

38. Turning centre according to Claim 37, **characterized in that** the supplementary tool carriers (220, 222) are disposed on opposite sides of the axis of rotation (108).

39. Turning centre according to any of Claims 34 to 38, **characterized in that that** the supplementary tool carriers (220, 222) are formed as multiple tool carriers.

40. Turning centre according to Claim 39, **characterized in that** the multiple tool carrier is formed as a linear tool carrier (220, 222).

41. Turning centre according to Claim 40, **characterized in that** the linear tool carrier (220, 222) has tool receiving means (232, 234) laid out in a row in a row direction (226, 228) that is parallel to the direction of advance of the tool carrier spindle (200).

42. Turning centre according to Claim 40 or 41, **characterized in that** all the tool receiving means (232, 234) of the linear tool carrier (220, 222) lie in one tool plane (252, 254).

43. Turning centre according to Claim 42, **characterized in that** a tool plane (250) of the tool spindle (200) and the tool planes (252, 254) of the linear tool carriers (220, 222) respectively form with one another an included angle that is greater than 90°.

44. Turning centre according to Claim 42 or 43, **characterized in that** each two of the tool planes (250, 252, 254) form with one another an included angle that is greater than 90°.

45. Turning centre according to any of Claims 4 to 44, **characterized in that** the tool carrier (104) is formed as a multiple linear tool carrier (280).

46. Turning centre according to Claim 45, **characterized in that** the multiple linear tool carrier (280) comprises linear tool carriers (218, 220, 222), which have tool receiving means (232, 234) laid out in a row in a row direction (226, 228) that is parallel to the direction of advance of the multiple linear tool carrier (280).

47. Turning centre according to Claim 45 or 46, **characterized in that** all the tool receiving means (232, 234) of each of the linear tool carriers (220, 222) lie in one tool plane (250, 252, 254).

48. Turning centre according to Claim 47, **characterized in that** each two of the tool planes (250, 252, 254) respectively form with one another an included angle that is greater than 90°.

49. Turning centre according to any of Claims 4 to 48, **characterized in that** the tool carrier (104) is formed as a tool turret (130).

50. Turning centre according to Claim 49, **characterized in that** the tool turret (130) has a turret head (136), which is rotatable about a turret axis (134) .

51. Turning centre according to Claim 50, **characterized in that** the turret axis (134) intersects the axis of rotation about which the tool turret (130) is rotatable with respect to the tool carrier base (102).

52. Turning centre according to any of Claims 49 to 51, **characterized in that** a turret housing (132) of the tool turret (130) is fixedly connected to the guiding arm (106).

53. Turning centre according to any of Claims 50 to 52, **characterized in that** the turret head (136) has tool receiving means which are disposed in such a way that tool directions of tools inserted in the turret head lie in one tool plane (140).

54. Turning centre according to Claim 53, **characterized in that** the tool plane (140) runs perpendicularly to the turret axis (134).

55. Turning centre according to Claim 53 or 54, **characterized in that** the axis of rotation (108) about which the tool turret (130) is rotatable with respect to the tool carrier base (102) runs parallel to the tool plane.

56. Turning centre according to any of Claims 53 to 55, **characterized in that** a point of intersection of the axis of rotation (108) and the turret axis (134) lies in the tool plane (140).

57. Turning centre according to any of the preceding claims, **characterized in that** the machine frame (10) has a machine bed (18) formed by two spaced-apart columns (20, 22).

58. Turning centre according to Claim 57, **characterized in that** the longitudinal axes (24, 26) of the columns (20, 22) extend transversely to a standing area (16) for the machine frame (10).

59. Turning centre according to Claim 57 or 58, **characterized in that** the columns (20, 22) extend parallel to one another.

60. Turning centre according to Claim 57 or 59, **characterized in that** the columns (20, 22) extend substantially perpendicularly to the standing area (16).

61. Turning centre according to any of Claims 57 to 60, **characterized in that** the columns (20, 22) are of approximately the same length.

62. Turning centre according to any of Claims 57 to 61, **characterized in that** at least one opening (32, 182) is provided between the columns (20, 22).

63. Turning centre according to any of Claims 57 to 62, **characterized in that** the columns (20, 22) are connected to one another by at least one cross bracing (28, 30).

64. Turning centre according to Claim 63, **characterized in that** the columns (20, 22) are connected at the ends by at least one cross bracing (30).

65. Turning centre according to Claim 64, **characterized in that** the at least one cross bracing (30) is formed onto at least one of the columns.

66. Turning centre according to any of Claims 57 to 65, **characterized in that** the columns (20, 22) are connected to form a yoke-like body (18).

67. Turning centre according to Claim 66, **characterized in that** the yoke-like body (18) encloses at least one opening (32, 182).

68. Turning centre according to Claim 67, **characterized in that** the yoke-like body encloses two openings (32, 182).

69. Turning centre according to any of Claims 57 to 68, **characterized in that** the columns (20, 22) have flat front sides (34, 36).

70. Turning centre according to any of Claims 57 to 69, **characterized in that** the respective front side (34, 36) runs transversely to the standing area (16) for the machine frame (10).

71. Turning centre according to any of Claims 57 to 70, **characterized in that** the columns (20, 22) have mutually facing flat transverse sides (120, 170).

72. Turning centre according to Claim 71, **characterized in that** the first and second transverse sides (120, 170) are disposed on opposite sides of the opening (32, 182).

73. Turning centre according to any of Claims 57 to 72, **characterized in that** the transverse sides (120, 170) run transversely to a standing area (16) for the machine frame (10).

74. Turning centre according to any of Claims 57 to 73, **characterized in that** the columns (20, 22) have an approximately rectangular cross-sectional shape.

75. Turning centre according to any of Claims 57 to 74, **characterized in that** the first workpiece spindle unit (50) is disposed on a front side (34) of a first (20) of the columns, the front side facing the working space (40),

76. Turning centre according to any of Claims 57 to 75, **characterized in that** the second workpiece spindle unit (70) is disposed on a front side (36) of a second (22) of the columns, the front side facing the working space (40),

77. Turning centre according to any of Claims 57 to 76, **characterized in that** at least one of the workpiece spindle units (50, 70) is guided movably relative to the machine bed (18), parallel to the respective front side (34, 36).

78. Turning centre according to Claim 77, **characterized in that** each of the workpiece spindle units (50, 70) is guided movably relative to the machine bed, parallel to the respective front side (34, 36) that carries the unit.

79. Turning centre according to any of Claims 57 to 78, **characterized in that in that** at least one tool carrier unit (100, 150) is disposed on a transverse side (120, 170) of one of the columns (20, 22), the transverse side facing the respective other column (22, 20).

80. Turning centre according to Claim 79, **characterized in that** each of the two tool carrier units (100, 150) is disposed on a transverse side (120, 170) of one of the columns (20, 22) of the machine bed (18).

81. Turning centre according to Claim 79 or 80, **characterized in that** the tool carrier units (100, 150) are disposed on different columns (20, 22) of the machine bed (18).

82. Turning centre according to any of Claims 79 to 81, **characterized in that** the first tool carrier unit (100) is associated with the first workpiece spindle unit (50).

83. Turning centre according to any of Claims 79 to 82, **characterized in that** the first tool carrier unit (100) is disposed on the column (20) carrying the first workpiece spindle unit (50).

84. Turning centre according to any of Claims 79 to 83, **characterized in that** the second tool carrier unit (150) is associated with the second workpiece spindle unit (70).

85. Turning centre according to any of Claims 79 to 84, **characterized in that** the second tool carrier unit (150) is disposed on the column (22) carrying the second workpiece spindle unit (70).

86. Turning centre according to any of Claims 79 to 85, **characterized in that** the tool carrier unit (100, 150) extends into the respective opening (32, 182).

87. Turning centre according to Claim 86, **characterized in that** the tool carrier unit extends through the respective opening (32, 182).

## Revendications

1. Centre d'usinage rotatif, comportant un bâti (10), une première unité à broche porte-pièce (50), montée sur le bâti (10) et munie d'une première broche porte-pièce (54), apte à tourner autour d'un axe (56), une deuxième unité à broche porte-pièce (70), montée sur le bâti (10) et munie d'une deuxième broche porte-pièce (74), apte à tourner autour d'un axe (76), la première et la deuxième unité à broche porte-pièce (50, 70) étant montées parallèlement à leur axe (56, 76) de manière mobile sur le bâti (10), et la deuxième unité à broche porte-pièce (70) est montée de manière mobile par rapport au bâti (10) dans la direction X, transversalement à son axe (76), depuis une position de transfert de pièce vers une position d'usinage, des unités porte-outil (100, 150), montées sur le bâti (10), sur lesquelles est agencé au moins un outil pour l'usinage d'une pièce maintenue dans les unités à broche porte-pièce (50, 70), l'unité porte-outil (150), associée à la deuxième unité à broche porte-pièce (70), étant montée sur le bâti (10) de manière stationnaire dans la direction de l'axe X, et un espace de travail (40), dans lequel des pièces (W) maintenues par les unités à broche porte-pièce (50, 70) peuvent être usinées au moyen de l'outil, **caractérisé en ce que** la première unité à broche porte-pièce (50) est montée sur le bâti (10) de manière immobile transversalement à son axe (56), **en ce que** les unités à broche porte-pièce (50, 70) sont disposées dans la position d'usinage en étant décalées l'une par rapport à l'autre dans la direction X, **en ce qu'**à chacune des unités à broche porte-pièce (50, 70) dans sa position d'usinage est associée sa propre unité porte-outil (100, 150), de telle sorte que, lorsque la deuxième unité à broche porte-pièce (70) est en position d'usinage, l'usinage d'une pièce peut être effectué avec chacune des unités à broche porte-pièce (50, 70) indépendamment de l'autre unité à broche porte-pièce (70, 50).

2. Centre d'usinage rotatif selon la revendication 1, **caractérisé en ce que** l'unité porte-outil (100), associée à la première unité à broche porte-pièce (50), est apte à se déplacer par rapport au premier axe de broche dans une direction X.

3. Centre d'usinage rotatif selon l'une quelconque des revendications précédentes, **caractérisé en ce que** les deux unités à broche porte-pièce (50, 70) avec leurs axes (56, 76) sont aptes à se déplacer dans un plan de guidage de broche (80) géométrique commun.

4. Centre d'usinage rotatif selon l'une quelconque des revendications précédentes, **caractérisé en ce que** chacune des unités porte-outil (100, 150) comporte une base (102) de porte-outil et un porte-outil (104).

5. Centre d'usinage rotatif selon la revendication 4, **caractérisé en ce que** la base (102) de porte-outil s'engage au moins partiellement dans un passage (32, 182) du bâti (10).

6. Centre d'usinage rotatif selon la revendication 4 ou 5, **caractérisé en ce que** le porte-outil (104) est apte à se déplacer dans un espace de travail (40), disposé sur le côté frontal d'un corps de table (18) de la machine.

7. Centre d'usinage rotatif selon l'une quelconque des revendications 4 à 6, **caractérisé en ce que** l'unité porte-outil (100, 150) comporte une unité d'entraînement (122), qui est montée sur un côté de la base (102) de porte-outil, opposé au porte-outil (104).

8. Centre d'usinage rotatif selon l'une quelconque des revendications 4 à 7, **caractérisé en ce que** l'unité d'entraînement (122) est montée sur un côté, opposé au porte-outil (104), du corps de table (18) de la machine.

9. Centre d'usinage rotatif selon l'une quelconque des revendications 4 à 8, **caractérisé en ce que** l'unité d'entraînement (122) est montée sur un côté, opposé au porte-outil (104), du passage (32).

10. Centre d'usinage rotatif selon l'une quelconque des revendications 4 à 9, **caractérisé en ce que** le porte-outil (104) de l'unité porte-outil (100, 150) respective est apte à se déplacer parallèlement à un plan de guidage d'outil (118), qui est situé transversalement à l'axe de broche (56, 76) de l'unité à broche porte-pièce (50, 70) associée.

11. Centre d'usinage rotatif selon la revendication 10, **caractérisé en ce que** le porte-outil (104) de ladite au moins une unité porte-outil (100, 150) est apte à se déplacer dans le plan de guidage d'outil (118) dans une première direction (X) parallèle au plan de guidage de broche (80).

12. Centre d'usinage rotatif selon la revendication 10 ou 11, **caractérisé en ce que** le porte-outil (104) de ladite au moins une unité porte-outil (100, 150) est apte à se déplacer dans le plan de guidage d'outil (118) dans une deuxième direction (Y) perpendiculaire au plan de guidage de broche (80).

13. Centre d'usinage rotatif selon l'une quelconque des revendications 10 à 12, **caractérisé en ce que** le porte-outil (104) de ladite au moins une unité porte-outil (100, 150) est apte à tourner autour d'un axe (B) parallèle au plan de guidage d'outil (118).

14. Centre d'usinage rotatif selon l'une quelconque des revendications 10 à 13, **caractérisé en ce que** la base (102) de porte-outil est montée sur un chariot porte-outil (112).

15. Centre d'usinage rotatif selon la revendication 14, **caractérisé en ce que** le chariot porte-outil (112) est apte à se déplacer dans une direction d'avance (X) du chariot.

16. Centre d'usinage rotatif selon la revendication 14 ou 15, **caractérisé en ce que** le chariot porte-outil (112) est apte à se déplacer dans une direction d'avance (X) du chariot, qui est à peu près parallèle à une direction transversale à l'axe (56, 76) respectif de la broche porte-pièce.

17. Centre d'usinage rotatif selon l'une quelconque des revendications 14 à 16, **caractérisé en ce que** le chariot porte-outil (112) est apte à se déplacer dans une direction X du centre d'usinage rotatif.

18. Centre d'usinage rotatif selon l'une quelconque des revendications 4 à 16, **caractérisé en ce que** le porte-outil (104) est apte à se déplacer par rapport à la base (102) de porte-outil dans une direction d'avance (Y).

19. Centre d'usinage rotatif selon la revendication 18, **caractérisé en ce que** la direction d'avance (Y) est à peu près parallèle à une direction transversale à l'axe (56, 76) respectif de la broche porte-pièce.

20. Centre d'usinage rotatif selon la revendication 18 ou 19, **caractérisé en ce que** la direction d'avance est une direction Y du centre d'usinage rotatif.

21. Centre d'usinage rotatif selon l'une quelconque des revendications 18 à 20, **caractérisé en ce que** la direction d'avance (Y) est parallèle à une direction transversale à la direction d'avance (X) du chariot.

22. Centre d'usinage rotatif selon l'une quelconque des revendications 4 à 21, **caractérisé en ce que** le porte-outil (104) est apte à tourner par rapport à la base (102) de porte-outil autour d'un axe de rotation (B).

23. Centre d'usinage rotatif selon la revendication 22, **caractérisé en ce que** l'axe de rotation (B) est à peu près parallèle à la direction d'avance (Y).

24. Centre d'usinage rotatif selon la revendication 22 ou 23, **caractérisé en ce que** l'axe de rotation (B) s'étend dans une direction (Y), qui est orientée parallèlement à une direction transversale à l'axe (56, 76) respectif de la broche porte-pièce.

25. Centre d'usinage rotatif selon l'une quelconque des revendications 22 à 24, **caractérisé en ce que** l'axe de rotation est un axe B du centre d'usinage rotatif.

26. Centre d'usinage rotatif selon l'une quelconque des revendications 4 à 25, **caractérisé en ce que** le porte-outil (104) est relié à la base (102) de porte-outil par un bras de guidage (106).

27. Centre d'usinage rotatif selon l'une quelconque des revendications 4 à 26, **caractérisé en ce que** le porte-outil (104) est réalisé sous la forme d'une broche porte-outil (200).

28. Centre d'usinage rotatif selon la revendication 27, **caractérisé en ce qu'**un carter (202) de la broche porte-outil est maintenu sur le bras de guidage (106).

29. Centre d'usinage rotatif selon la revendication 28, **caractérisé en ce que** le carter (202) de la broche porte-outil est assemblé de manière fixe à une extrémité avant du bras de guidage (106).

30. Centre d'usinage rotatif selon l'une quelconque des revendications 27 à 29, **caractérisé en ce que** la broche porte-outil (200) comporte un axe (216) orienté transversalement à l'axe de rotation (108).

31. Centre d'usinage rotatif selon l'une quelconque des revendications 27 à 30, **caractérisé en ce que** la broche porte-outil (200) comporte un axe (216) orienté transversalement à la direction d'avance (Y).

32. Centre d'usinage rotatif selon l'une quelconque des revendications 27 à 31, **caractérisé en ce qu'**un arbre de broche (206), monté dans le carter (202) de la broche porte-outil, porte un raccordement d'outil (209) au niveau d'une extrémité (208).

33. Centre d'usinage rotatif selon la revendication 32, **caractérisé en ce que** le raccordement d'outil (209) est disposé sur un côté de l'axe de rotation (108).

34. Centre d'usinage rotatif selon l'une quelconque des revendications 27 à 33, **caractérisé en ce que** le carter (202) de la broche porte-outil comporte un porte-outil supplémentaire (220, 222).

35. Centre d'usinage rotatif selon la revendication 34, **caractérisé en ce que** le porte-outil supplémentaire (220, 222) est disposé sur le carter (202) de la broche porte-outil sur au moins un côté de l'axe (216) de la broche porte-outil.

36. Centre d'usinage rotatif selon la revendication 34 ou 35, **caractérisé en ce que** le carter (202) de la broche porte-outil porte un porte-outil supplémentaire (220, 222) sur plusieurs côtés.

37. Centre d'usinage rotatif selon la revendication 36, **caractérisé en ce que** le carter (202) de la broche porte-outil porte un porte-outil supplémentaire (220, 222) sur des côtés face à face.

38. Centre d'usinage rotatif selon la revendication 37, **caractérisé en ce que** les porte-outils supplémentaires (220, 222) sont disposés sur des côtés face à face de l'axe de rotation (108).

39. Centre d'usinage rotatif selon l'une quelconque des revendications 34 à 38, **caractérisé en ce que** les porte-outils supplémentaires (220, 222) sont réalisés sous la forme de supports pour plusieurs outils.

40. Centre d'usinage rotatif selon la revendication 39, **caractérisé en ce que** les supports pour plusieurs outils sont réalisés sous forme de porte-outil linéaires (220, 222).

41. Centre d'usinage rotatif selon la revendication 40, **caractérisé en ce que** le porte-outil linéaire (220, 222) comporte des raccordements d'outil (232, 234) disposés les uns derrière les autres dans une direction d'alignement (226, 228) parallèle à la direction d'avance de la broche porte-outil (200).

42. Centre d'usinage rotatif selon la revendication 40 ou 41, **caractérisé en ce que** tous les raccordements d'outil (232, 234) du porte-outil linéaire (220, 222) sont situés dans un plan d'outil (252, 254).

43. Centre d'usinage rotatif selon la revendication 42, **caractérisé en ce qu'**un plan d'outil (250) de la broche porte-outil (200) et les plans d'outil (252, 254) des porte-outils linéaires (220, 222) forment entre eux un angle qui est supérieur à 90°.

44. Centre d'usinage rotatif selon la revendication 42 ou 43, **caractérisé en ce que** respectivement deux des plans d'outil (250, 252, 254) forment entre eux un angle qui est supérieur à 90°.

45. Centre d'usinage rotatif selon l'une quelconque des revendications 4 à 44, **caractérisé en ce que** le porte-outil (104) est réalisé sous la forme d'un multi-porte-outil linéaire (280).

46. Centre d'usinage rotatif selon la revendication 45, **caractérisé en ce que** le multi-porte-outil linéaire (280) comporte des porte-outil linéaires (218, 220, 222), qui comportent des raccordements d'outil (232, 234) alignés dans une direction d'alignement (226, 228) parallèle à la direction d'avance du multi-porte-outil linéaire (280).

47. Centre d'usinage rotatif selon la revendication 45 ou 46, **caractérisé en ce que** tous les raccordements d'outil (232, 234) de chacun des porte-outils linéaires (220, 222) sont situés dans un plan d'outil (250, 252, 254).

48. Centre d'usinage rotatif selon la revendication 47, **caractérisé en ce que** respectivement deux des plans d'outil (250, 252, 254) forment entre eux un angle supérieur à 90°.

49. Centre d'usinage rotatif selon l'une quelconque des revendications 4 à 48, **caractérisé en ce que** le porte-outil (104) est réalisé sous la forme d'une tourelle porte-outil (130).

50. Centre d'usinage rotatif selon la revendication 49, **caractérisé en ce que** la tourelle porte-outil (130) comporte un chariot de tourelle (136) apte à tourner autour d'un axe (134) de la tourelle.

51. Centre d'usinage rotatif selon la revendication 50, **caractérisé en ce que** l'axe (134) de la tourelle coupe l'axe de rotation autour duquel la tourelle porte-outil (130) est apte à tourner par rapport à la base (102) de porte-outil.

52. Centre d'usinage rotatif selon l'une quelconque des revendications 49 à 51, **caractérisé en ce qu'**un carter (132) de la tourelle porte-outil (130) est assemblé de manière fixe au bras de guidage (106).

53. Centre d'usinage rotatif selon l'une quelconque des revendications 50 à 52, **caractérisé en ce que** le chariot de tourelle (136) comporte des raccordements d'outil qui sont agencés de telle sorte que les directions des outils insérés dans ceux-ci sont situées dans un plan d'outil (140).

54. Centre d'usinage rotatif selon la revendication 53, **caractérisé en ce que** le plan d'outil (140) est disposé perpendiculairement à l'axe (134) de la tourelle.

55. Centre d'usinage rotatif selon la revendication 53 ou 54, **caractérisé en ce que** l'axe de rotation (108), autour duquel la tourelle porte-outil (130) peut tourner par rapport à la base (102) de porte-outil, est orienté parallèlement au plan d'outil.

56. Centre d'usinage rotatif selon l'une quelconque des revendications 53 à 55, **caractérisé en ce qu'**un point d'intersection entre l'axe de rotation (108) et l'axe de tourelle (134) est situé dans le plan d'outil (140).

57. Centre d'usinage rotatif selon l'une quelconque des revendications précédentes, **caractérisé en ce que** le bâti (10) comporte un corps de table (18) formé par deux colonnes (20, 22) situées à distance l'une de l'autre.

58. Centre d'usinage rotatif selon la revendication 57, **caractérisé en ce que** les colonnes (20, 22) s'étendent avec leurs axes longitudinaux (24, 26) transversalement à une surface de pose (16) du bâti (10).

59. Centre d'usinage rotatif selon la revendication 57 ou 58, **caractérisé en ce que** les colonnes (20, 22) sont parallèles entre elles.

60. Centre d'usinage rotatif selon la revendication 57 ou 59, **caractérisé en ce que** les colonnes (20, 22) sont sensiblement perpendiculaires à la surface de pose (16).

61. Centre d'usinage rotatif selon l'une quelconque des revendications 57 à 60, **caractérisé en ce que** les colonnes (20, 22) ont à peu près la même longueur.

62. Centre d'usinage rotatif selon l'une quelconque des revendications 57 à 61, **caractérisé en ce qu'**il est prévu au moins un passage (32, 182) entre les colonnes (20, 22).

63. Centre d'usinage rotatif selon l'une quelconque des revendications 57 à 62, **caractérisé en ce que** les colonnes (20, 22) sont reliées entre elles par au moins une entretoise transversale (28, 30).

64. Centre d'usinage rotatif selon la revendication 63, **caractérisé en ce que** les colonnes (20, 22) sont reliées du côté des extrémités par ladite au moins une entretoise transversale (30).

65. Centre d'usinage rotatif selon la revendication 64, **caractérisé en ce que** ladite au moins une entretoise transversale (30) est formée sur au moins une des colonnes.

66. Centre d'usinage rotatif selon l'une quelconque des revendications 57 à 65, **caractérisé en ce que** les colonnes (20, 22) sont reliées pour former un corps (18) en forme de berceau.

67. Centre d'usinage rotatif selon la revendication 66, **caractérisé en ce que** le corps (18) en forme de berceau entoure au moins un passage (32, 182).

68. Centre d'usinage rotatif selon la revendication 67, **caractérisé en ce que** le corps en forme de berceau entoure deux passages (32, 182).

69. Centre d'usinage rotatif selon l'une quelconque des revendications 57 à 68, **caractérisé en ce que** les colonnes (20, 22) ont des faces frontales (34, 36) aplaties.

70. Centre d'usinage rotatif selon l'une quelconque des revendications 57 à 69, **caractérisé en ce que** la face frontale (34, 36) respective est orientée transversalement à la surface de pose (16) du bâti (10).

71. Centre d'usinage rotatif selon l'une quelconque des revendications 57 à 70, **caractérisé en ce que** les colonnes (20, 22) comportent des faces transversales (120, 170) aplaties, orientées l'une vers l'autre.

72. Centre d'usinage rotatif selon la revendication 71, **caractérisé en ce que** la première et la deuxième face transversale (120, 170) sont disposées sur des côtés face à face du passage (32, 182).

73. Centre d'usinage rotatif selon l'une quelconque des revendications 57 à 72, **caractérisé en ce que** les faces transversales (120, 170) sont orientées transversalement à une surface de pose (16) du bâti (10).

74. Centre d'usinage rotatif selon l'une quelconque des revendications 57 à 73, **caractérisé en ce que** les colonnes (20, 22) ont une section à forme sensiblement rectangulaire.

75. Centre d'usinage rotatif selon l'une quelconque des revendications 57 à 74, **caractérisé en ce que** la première unité à broche porte-pièce (50) est montée sur une face frontale (34), orientée vers l'espace de travail (40), de la première (20) des colonnes.

76. Centre d'usinage rotatif selon l'une quelconque des revendications 57 à 75, **caractérisé en ce que** la deuxième unité à broche porte-pièce (70) est montée sur une face frontale (36), orientée vers l'espace de travail (40), de la deuxième (22) des colonnes.

77. Centre d'usinage rotatif selon la revendication 75 ou 76, **caractérisé en ce qu'**au moins l'une des unités à broche porte-pièce (50, 70) est logée de manière à pouvoir se déplacer par rapport au corps de table (18) de la machine parallèlement à la face frontale (34, 36) respective.

78. Centre d'usinage rotatif selon la revendication 77, **caractérisé en ce que** chacune des unités à broche porte-pièce (50, 70) est logée de manière à pouvoir se déplacer par rapport au corps de table de la machine parallèlement à la face frontale (34, 36) portant ladite unité à broche porte-pièce respective.

79. Centre d'usinage rotatif selon l'une quelconque des revendications 57 à 78, **caractérisé en ce qu'**au moins une unité porte-outil (100, 150) est montée sur une face transversale (120, 170) de l'une des colonnes (20, 22), laquelle est orientée vers l'autre colonne (22, 20) respective.

80. Centre d'usinage rotatif selon la revendication 79, **caractérisé en ce que** chacune des deux unités porte-outil (100, 150) est montée sur une face transversale (120, 170) de l'une des colonnes (20, 22) du corps de table (18) de la machine.

81. Centre d'usinage rotatif selon la revendication 79 ou 80, **caractérisé en ce que** les unités porte-outil (100, 150) sont montées sur des colonnes (20, 22) différentes du corps de table (18) de la machine.

82. Centre d'usinage rotatif selon l'une quelconque des revendications 79 à 81, **caractérisé en ce que** la première unité porte-outil (100) est associée à la première unité à broche porte-pièce (50).

83. Centre d'usinage rotatif selon l'une quelconque des revendications 79 à 82, **caractérisé en ce que** la première unité porte-outil (100) est montée sur la colonne (20) portant la première unité à broche porte-pièce (50).

84. Centre d'usinage rotatif selon l'une quelconque des revendications 79 à 83, **caractérisé en ce que** la deuxième unité porte-outil (150) est associée à la deuxième unité à broche porte-pièce (70).

85. Centre d'usinage rotatif selon l'une quelconque des revendications 79 à 84, **caractérisé en ce que** la deuxième unité porte-outil (150) est montée sur la colonne (22) portant la deuxième unité à broche porte-pièce (70).

86. Centre d'usinage rotatif selon l'une quelconque des revendications 79 à 85, **caractérisé en ce que** l'unité porte-outil (100, 150) s'étend à l'intérieur du passage (32, 182) respectif.

87. Centre d'usinage rotatif selon la revendication 86, **caractérisé en ce que** l'unité porte-outil s'étend à travers le passage (32, 182) respectif.
